(19)

**Europäisches Patentamt**
**European Patent Office**
**Office européen des brevets**

(11) **EP 4 746 508 A1**

(12) **EUROPEAN PATENT APPLICATION**
published in accordance with Art. 153(4) EPC

(43) Date of publication:
**20.05.2026 Bulletin 2026/21**

(21) Application number: **23951768.3**

(22) Date of filing: **12.09.2023**

(51) International Patent Classification (IPC):
**H04W 28/06** (2009.01)

(52) Cooperative Patent Classification (CPC):
**H04W 28/06**

(86) International application number:
**PCT/CN2023/118375**

(87) International publication number:
**WO 2025/054827 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **YANG, Zhaohui**
  **Hangzhou, Zhejiang 310058 (CN)**
- **HUANG, Chongwen**
  **Hangzhou, Zhejiang 310058 (CN)**

- **ZHAO, Zhouxiang**
  **Hangzhou, Zhejiang 310058 (CN)**
- **YANG, Qianqian**
  **Hangzhou, Zhejiang 310058 (CN)**
- **ZHANG, Zhaoyang**
  **Hangzhou, Zhejiang 310058 (CN)**
- **ZHANG, Gongzheng**
  **Shenzhen, Guangdong 518129 (CN)**
- **LI, Rong**
  **Shenzhen, Guangdong 518129 (CN)**

(74) Representative: **Körber, Martin Hans**
**Mitscherlich PartmbB**
**Karlstraße 7**
**80333 München (DE)**

(54) **SEMANTIC COMMUNICATION METHOD AND RELATED APPARATUS**

(57) This application discloses a semantic communication method and a related apparatus. The method includes: determining a first set, where the first set includes at least one triple corresponding to to-be-transmitted data, and each triple includes a first head entity, a first tail entity, and a first relation between the first head entity and the first tail entity; determining a third set based on a probability corresponding to a second relation in a second set, where the second set includes at least one quadruple, each quadruple includes a second head entity, a second tail entity, a second relation between the second head entity and the second tail entity, and a probability corresponding to the second relation, the third set includes at least one 2-tuple, and the 2-tuple includes the first head entity and the first tail entity; and sending the third set to a receiving side, where the third set is used for the receiving side to determine the first set. This reduces an amount of transmitted data, and reduces a communication delay.

Determine a first set, where the first set includes at least one triple corresponding to to-be-transmitted data, and each triple includes a first head entity, a first tail entity, and a first relation between the first head entity and the first tail entity — S1

Obtain a second set, where the second set includes at least one quadruple, and each quadruple includes a second head entity, a second tail entity, a second relation between the second head entity and the second tail entity, and a probability corresponding to the second relation — S2

Determine a third set based on the probability corresponding to the second relation, where the third set includes at least one 2-tuple, and the 2-tuple includes the first head entity and the first tail entity — S3

Send the third set to a receive end, where the third set is used for the receive end to determine the first set — S4

FIG. 2

EP 4 746 508 A1

**Description**

<u>TECHNICAL FIELD</u>

This application relates to the field of communication technologies, and in particular, to a semantic communication method and a related apparatus.

<u>BACKGROUND</u>

In comparison with conventional communication technologies, semantic communication introduces semantic encoding in transmission of semantic information of a source. During semantic communication, semantic features of data of a transmitting side are captured based on tasks to be performed by a receiving side, and only important semantic features are transmitted. This greatly reduces resources needed for communication. The tasks of the receiving side may be data reconstruction or some more intelligent tasks such as image classification and language translation.

As a structured form of knowledge, a knowledge graph (knowledge graph, KG) is a collection of semantic information. The knowledge graph consists of entities (entity) and relations (relation). The entities may be objects in the real world or abstract concepts. The relations represent specific relations among entities. Knowledge in the knowledge graph may be represented by a triple (head entity, relation, tail entity), for example, (radar, is used for, object detection) and (federated learning, belongs to, distributed learning). A structured knowledge graph may be constructed by extracting entity and relation information from unstructured text data.

Currently, during data transmission, the transmitting side may represent data based on a knowledge graph, and send the knowledge graph to a receiving side. After receiving the knowledge graph, the receiving side may restore original data or perform subsequent intelligent tasks. In the foregoing solution, all information in the knowledge graph is usually sent to the receiving side, leading to a large amount of transmitted data.

<u>SUMMARY</u>

This application provides a semantic communication method and a related apparatus, to reduce an amount of transmitted data.

According to a first aspect, this application provides a semantic communication method. The method may be applied to the field of communication technologies, and includes:

first, determining a first set, where the first set includes at least one triple corresponding to to-be-transmitted data, and each triple includes a first head entity, a first tail entity, and a first relation between the first head entity and the first tail entity; determining a third set based on a probability corresponding to a second relation in a second set, where the second set includes at least one quadruple, each quadruple includes a second head entity, a second tail entity, a second relation between the second head entity and the second tail entity, and a probability corresponding to the second relation, the third set includes at least one 2-tuple, and the 2-tuple includes the first head entity and the first tail entity; and finally, sending the third set to a receiving side, where the third set is used for the receiving side to determine the first set.

In this application, in comparison with directly sending the first set corresponding to the to-be-transmitted data, the first relation that may be omitted from the first set is determined based on the probability corresponding to the second relation, and the third set from which the first relation is omitted is sent, to reduce an amount of transmitted data, and reduce a communication delay. In addition, the same second set is shared with the receiving side, so that the receiving side can restore, based on the second set, the first relation omitted from the third set, to obtain the complete first set.

In a possible implementation, the method further includes: receiving the second set.

In this implementation, the second set is received, to omit a part of information based on background knowledge that is the same as background knowledge of the receiving side.

In a possible implementation, the method further includes: sending the second set to the receiving side.

In this implementation, the second set is sent to the receiving side, so that the receiving side restores omitted information based on common background knowledge with a transmitting end.

In a possible implementation, the method further includes:

determining first information, where the first information indicates a maximum quantity of pieces of information omitted from the first set; and
sending the first information to the receiving side.

In a possible implementation, the method further includes:

receiving first information from the receiving side, where the first information indicates a maximum quantity of pieces of information omitted from the first set.

In a possible implementation, determining the third set based on the probability corresponding to the second relation in the second set includes:

for the at least one triple, selecting, from the at least one triple based on the probability corresponding to the second relation, all triples from which the first relation is omitted;
obtaining, based on the first set and all triples that are in the first set and from which the first relation is omitted, all triples from which the first relation is not omitted; and
obtaining the third set based on all the triples from which the first relation is omitted and all the triples from which the first relation is not omitted.

In this implementation, in comparison with the first set, the third set includes the triples from which the first relation is omitted and the triples from which the first relation is not omitted, to further reduce an amount of transmitted data.

In a possible implementation, determining the third set based on the probability corresponding to the second relation in the second set includes:

for the at least one triple, selecting, from the at least one triple based on the probability corresponding to the second relation, all triples from which the first relation is omitted;
for each triple, if a quadruple matching the triple is selected from the second set, when a probability corresponding to a second relation in the quadruple meets a first condition, omitting a first relation in the triple to obtain a triple from which the first relation is omitted; and
obtaining the third set based on all the triples from which the first relation is omitted and all triples from which the first relation is not omitted.

In this implementation, the quadruple matching the first set is selected from the second set, and when the probability corresponding to the second relation in the quadruple meets the first condition, the first relation in the triple is omitted to obtain the third set from which a part of first relations are omitted, to reduce an amount of transmitted data. In addition, the third set is selected based on the second set, so that the receiving side can restore the omitted first relation based on the common second set, to obtain the complete first set.

In a possible implementation, determining the third set based on the probability corresponding to the second relation in the second set includes:

for the at least one triple, selecting, from the at least one triple based on the probability corresponding to the second relation, all triples from which the first relation is omitted;
for each triple, if a first head entity in the triple is the same as a second head entity in a quadruple, a first tail entity in the triple is the same as a second tail entity in the quadruple, and a first relation in the triple is the same as a second relation in the quadruple, when a probability corresponding to the second relation in the quadruple meets a first condition, omitting the first relation in the triple to obtain a triple from which the first relation is omitted; and
obtaining the third set based on all the triples from which the first relation is omitted and all triples from which the first relation is not omitted.

In this implementation, the first relation in the triple can be omitted based on the probability corresponding to the second relation in the quadruple only when all of the first head entity, the first relation, and the first tail entity in the triple match the second head entity, the first relation, and the second tail entity in the quadruple, and only the first head entity and the first tail entity are transmitted, to reduce an amount of transmitted data.

In a possible implementation, determining the third set based on the probability corresponding to the second relation in the second set includes:

for the at least one triple, selecting, from the at least one triple based on the probability corresponding to the second relation, all triples from which the first relation is omitted;
for each triple, if a first head entity in the triple is the same as a second head entity in a quadruple, a first tail entity in the triple is the same as a second tail entity in the quadruple, and a first relation in the triple is the same as a second relation in the quadruple, when a probability corresponding to the second relation in the quadruple is a largest one of all probabilities, omitting the first relation in the triple to obtain a triple from which the first relation is omitted, where all the probabilities are probabilities corresponding to all second relations between the second head entity and the second tail entity in the quadruple; and
obtaining the third set based on all the triples from which the first relation is omitted and all triples from which the first relation is not omitted.

In this implementation, the first relation in the corresponding triple can be omitted only when the probability corresponding to the second relation in the quadruple is the largest one of all the probabilities, so that the receiving side can restore the first relation omitted from the triple according to a same rule. This helps reduce an amount of transmitted data, and helps restore data.

In a possible implementation, determining the third set based on the probability corresponding to the second relation in the second set includes:

for the at least one triple, selecting, from the at least one triple based on the probability corresponding to the second relation, all triples from which the first relation is omitted;

obtaining, based on the first set and all triples that are in the first set and from which the first relation is omitted, all triples from which the first relation is not omitted;

obtaining a fourth set and a fifth set, where the fourth set includes all the triples that are in the first set and from which the first relation is omitted, and the fifth set includes a triple in the first set other than the fourth set;

for several triples in the fifth set, selecting, from the several triples by using the fourth set as a condition, a triple from which the first relation is omitted and a triple from which the first relation is not omitted, to update the fourth set and the fifth set; and

obtaining the third set based on an updated fourth set and an updated fifth set.

In this implementation, after the triples from which the first relation is omitted and the triples from which the first relation is not omitted are obtained, the triple from which the first relation is omitted and the triple from which the first relation is not omitted may be further selected from the fifth set by using all the triples that are in the first set and from which the first relation is omitted as the condition, to select more triples from which the first relation is omitted, and further reduce an amount of transmitted data.

In a possible implementation, determining the third set based on the probability corresponding to the second relation in the second set includes:

for the at least one triple, selecting, from the at least one triple based on the probability corresponding to the second relation, all triples from which the first relation is omitted;

obtaining, based on the first set and all triples that are in the first set and from which the first relation is omitted, all triples from which the first relation is not omitted;

obtaining a fourth set and a fifth set, where the fourth set includes all the triples that are in the first set and from which the first relation is omitted, and the fifth set includes a triple in the first set other than the fourth set;

for several triples in the fifth set, calculating, for each of the several triples when the triple matches any quadruple in the second set, a conditional probability corresponding to the quadruple under a condition that any n triples in the fourth set exist, where n is a positive integer, and an initial value of n is 1;

when the conditional probability meets a second condition, omitting a first relation in the triple to obtain an updated fourth set and an updated fifth set;

when a third condition is met, adding 1 to n, and returning to the step of calculating, for each of the several triples when the triple matches any quadruple in the second set, a conditional probability corresponding to the quadruple under a condition that any n triples in the fourth set exist; and

obtaining the third set based on the updated fourth set and the updated fifth set.

In this implementation, after a set from which a part of first relations are omitted is selected, a triple from which the first relation is omitted is used as a condition for a second round of conditional probability search, to further reduce an amount of transmitted data.

In a possible implementation, the second condition includes:

The conditional probability corresponding to the quadruple is a largest one of all probabilities, where all the probabilities are conditional probabilities corresponding to all second relations between a second head entity and a second tail entity in the quadruple.

In this implementation, that a conditional probability corresponding to a first relation is a largest one of all conditional probabilities is used as a condition for omission, so that the receiving side can restore the first relation with the largest probability from the same second set based on the condition. This facilitates restoration of the first set.

In a possible implementation, the third condition includes at least one of the following:

n is less than a first value; and

a quantity of triples in the fourth set is less than a second value.

In a possible implementation, determining the third set based on the probability corresponding to the second relation in the second set includes:

for the at least one triple, selecting, from the at least one triple based on the probability corresponding to the second relation, all triples from which the first relation is omitted;

obtaining, based on the first set and all triples that are in the first set and from which the first relation is omitted, all triples from which the first relation is not omitted;

when a quantity of all first relations omitted from the first set is less than a second value, continuing to perform a subsequent operation, where the second value is the maximum quantity of pieces of information omitted from the first set, and the second value is obtained based on a device capability, a time threshold, or a channel condition;

obtaining a fourth set and a fifth set, where the fourth set includes all the triples that are in the first set and from which the first relation is omitted, and the fifth set includes a triple in the first set other than the fourth set;

for several triples in the fifth set, selecting, from the several triples by using the fourth set as a condition, a triple from which the first relation is omitted and a triple from which the first relation is not omitted, to update the fourth set and the fifth set; and

obtaining the third set based on an updated fourth set and an updated fifth set.

In this implementation, the quantity of first relations omitted from the first set may be obtained based on the device capability, the time threshold, or the channel condition, to limit the quantity of first relations omitted from the first set according to an actual requirement, to meet different transmission requirements.

In a possible implementation, the method further includes:

determining second information, where the second information indicates to send the third set by using transmit power.

In a possible implementation, the method further includes:

receiving second information from the receiving side, where the second information indicates to send the third set by using transmit power.

According to a second aspect, this application provides a semantic communication method, including:

determining a first set, where the first set includes at least one triple, and each triple includes a first head entity, a first tail entity, and a first relation between the first head entity and the first tail entity;

determining, based on a probability corresponding to a second relation in a second set, information omitted from the first set, to obtain a third set, where the second set includes at least one quadruple, and each quadruple includes a second head entity, a second tail entity, a second relation between the second head entity and the second tail entity, and a probability corresponding to the second relation; and

sending the third set to a receiving side, where the third set is used for the receiving side to determine the first set.

In a possible implementation, the method further includes:

receiving the second set.

In a possible implementation, the method further includes:

sending the second set to the receiving side.

In a possible implementation, the method further includes:

determining first information, where the first information indicates a maximum quantity of pieces of information omitted from the first set; and

sending the first information to the receiving side.

In a possible implementation, the method further includes:

receiving first information from the receiving side, where the first information indicates a maximum quantity of pieces of information omitted from the first set.

In a possible implementation, determining the third set based on the probability corresponding to the second relation in the second set includes:

for the at least one triple, selecting, from the at least one triple based on the probability corresponding to the second relation, all triples from which the first relation is omitted;

obtaining, based on the first set and all triples that are in the first set and from which the first relation is omitted, all triples from which the first relation is not omitted; and

obtaining the third set based on all the triples from which the first relation is omitted and all the triples from which the first relation is not omitted.

In a possible implementation, obtaining, based on the first set and all the triples that are in the first set and from which the first relation is omitted, all the triples from which the first relation is not omitted includes:

for the at least one triple, selecting, from the at least one triple based on the probability corresponding to the second relation, all triples from which the first relation is omitted;

for each triple, if a quadruple matching the triple is selected from the second set, when a probability corresponding to a second relation in the quadruple meets a first condition, omitting a first relation in the triple to obtain a triple from which the first relation is omitted; and

obtaining the third set based on all the triples from which the first relation is omitted and all the triples from which the first relation is not omitted.

In a possible implementation, a condition for selecting the quadruple matching the triple from the second set is as follows:

A first head entity in the triple is the same as a second head entity in the quadruple;

a first tail entity in the triple is the same as a second tail entity in the quadruple; and
the first relation in the triple is the same as the second relation in the quadruple.

In a possible implementation, the first condition includes:
The probability corresponding to the second relation in the quadruple is a largest one of all probabilities, where all the probabilities are probabilities corresponding to all second relations between the second head entity and the second tail entity in the quadruple.

In a possible implementation, obtaining the third set based on all the triples from which the first relation is omitted and all the triples from which the first relation is not omitted includes:

obtaining a fourth set and a fifth set, where the fourth set includes all the triples that are in the first set and from which the first relation is omitted, and the fifth set includes a triple in the first set other than the fourth set;

for several triples in the fifth set, selecting, from the several triples by using the fourth set as a condition, a triple from which the first relation is omitted and a triple from which the first relation is not omitted, to update the fourth set and the fifth set; and

obtaining the third set based on an updated fourth set and an updated fifth set.

In a possible implementation, for the several triples in the fifth set, selecting, from the several triples by using the fourth set as the condition, the triple from which the first relation is omitted and the triple from which the first relation is not omitted, to update the fourth set and the fifth set includes:

for the several triples in the fifth set, calculating, for each of the several triples when the triple matches any quadruple in the second set, a conditional probability corresponding to the quadruple under a condition that any $n$ triples in the fourth set exist, where $n$ is a positive integer, and an initial value of $n$ is 1;

when the conditional probability meets a second condition, omitting a first relation in the triple to obtain an updated fourth set and an updated fifth set; and

when a third condition is met, adding 1 to $n$, and returning to the step of calculating, for each of the several triples when the triple matches any quadruple in the second set, a conditional probability corresponding to the quadruple under a condition that any $n$ triples in the fourth set exist.

In a possible implementation, the second condition includes:
The conditional probability corresponding to the quadruple is a largest one of all probabilities, where all the probabilities are conditional probabilities corresponding to all second relations between a second head entity and a second tail entity in the quadruple.

In a possible implementation, the third condition includes at least one of the following:

$n$ is less than a first value; and
a quantity of triples in the fourth set is less than a second value.

Before obtaining the fourth set and the fifth set, the method further includes:

obtaining a second value, where the second value is the maximum quantity of pieces of information omitted from the first set; and

when a quantity of all first relations omitted from the first set is less than the second value, continuing to perform a subsequent operation.

According to a third aspect, this application provides a semantic communication method, including:

receiving a third set from a transmitting side, where the third set includes at least one 2-tuple, and the 2-tuple includes a first head entity and a first tail entity; and
determining a first set based on a probability corresponding to a second relation in a second set, where the second set includes at least one quadruple, each quadruple includes a second head entity, a second tail entity, a second relation between the second head entity and the second tail entity, and a probability corresponding to the second relation, the first set includes at least one triple, and each triple includes the first head entity, the first tail entity, and a first relation between the first head entity and the first tail entity.

In this application, after the third set is received, the first relation omitted from the third set may be restored based on the second set shared with the transmitting side, to obtain the complete first set.

In a possible implementation, the method further includes:
receiving the second set.

In a possible implementation, the method further includes:
sending the second set to the transmitting side.

In a possible implementation, the method further includes:

determining first information, where the first information indicates a maximum quantity of pieces of information omitted from the first set; and
sending the first information.

In a possible implementation, the method further includes:
receiving first information from the transmitting side, where the first information indicates a maximum quantity of pieces of information omitted from the first set.

In a possible implementation, determining the first set based on the probability corresponding to the second relation in the second set includes:

for the at least one 2-tuple in the third set, obtaining, based on the probability of the second relation, a first relation omitted from each of the at least one 2-tuple, to obtain the at least one triple; and
obtaining the first set based on all triples in the third set and the at least one triple.

In a possible implementation, obtaining, based on the probability of the second relation, the first relation omitted from each of the at least one 2-tuple, to obtain the at least one triple includes:
for each of the at least one 2-tuple, selecting a quadruple matching the 2-tuple from the second set, and when a probability corresponding to a second relation in the quadruple meets a first condition, adding the second relation in the quadruple to the 2-tuple to obtain a triple.

In a possible implementation, a condition for selecting the quadruple matching the 2-tuple from the second set includes:
A first head entity in the 2-tuple is the same as a second head entity in the quadruple, and a first tail entity in the 2-tuple is the same as a second tail entity in the quadruple.

In a possible implementation, the first condition includes:
The probability corresponding to the second relation in the quadruple is a largest one of all probabilities, where all the probabilities are probabilities corresponding to all second relations between the second head entity and the second tail entity in the quadruple.

In a possible implementation, obtaining the first set based on all the triples in the third set and the at least one triple includes:

calculating, by using a 2-tuple that is in the third set and that has been restored to a triple as a condition, a conditional probability of any unrestored 2-tuple under a condition that a 2-tuple that is in the third set and that has been restored to a triple exists;
for any unrestored 2-tuple in the third set, when a conditional probability of the unrestored 2-tuple is a largest one of all conditional probabilities, obtaining a first relation corresponding to the unrestored 2-tuple to obtain a restored triple, where all the conditional probabilities are conditional probabilities corresponding to all unrestored 2-tuples in the third set under a same condition; and

obtaining the first set based on the restored triple, all the triples in the third set, and the at least one triple.

According to a fourth aspect, this application provides a communication device, including:

a processing module, configured to obtain a first set, where the first set includes at least one triple corresponding to to-be-transmitted data, and each triple includes a first head entity, a first tail entity, and a first relation between the first head entity and the first tail entity, where
the processing module is further configured to determine a third set based on a probability corresponding to a second relation in a second set, where the second set includes at least one quadruple, each quadruple includes a second head entity, a second tail entity, a second relation between the second head entity and the second tail entity, and a probability corresponding to the second relation, the third set includes at least one 2-tuple, and the 2-tuple includes the first head entity and the first tail entity; and
a transceiver module, configured to send the third set to a receiving side, where the third set is used for the receiving side to determine the first set.

In a possible implementation, the processing module is further configured to:
receive the second set.
In a possible implementation, the transceiver module is further configured to:
send the second set to the receiving side.
In a possible implementation, the processing module is further configured to determine first information, where the first information indicates a maximum quantity of pieces of information omitted from the first set; and
the transceiver module is further configured to send the first information to the receiving side.
In a possible implementation, the transceiver module is further configured to:
receive first information from the receiving side, where the first information indicates a maximum quantity of pieces of information omitted from the first set.
In a possible implementation, the processing module is further configured to:

for the at least one triple, select, from the at least one triple based on the probability corresponding to the second relation, all triples from which the first relation is omitted;
obtain, based on the first set and all triples that are in the first set and from which the first relation is omitted, all triples from which the first relation is not omitted; and
obtain the third set based on all the triples from which the first relation is omitted and all the triples from which the first relation is not omitted.

In a possible implementation, the processing module is further configured to:

for the at least one triple, select, from the at least one triple based on the probability corresponding to the second relation, all triples from which the first relation is omitted;
for each triple, if a quadruple matching the triple is selected from the second set, when a probability corresponding to a second relation in the quadruple meets a first condition, omit a first relation in the triple to obtain a triple from which the first relation is omitted; and
obtain the third set based on all the triples from which the first relation is omitted and all the triples from which the first relation is not omitted.

In a possible implementation, the processing module is further configured to:

for the at least one triple, select, from the at least one triple based on the probability corresponding to the second relation, all triples from which the first relation is omitted;
for each triple, if a first head entity in the triple is the same as a second head entity in a quadruple, a first tail entity in the triple is the same as a second tail entity in the quadruple, and a first relation in the triple is the same as a second relation in the quadruple, when a probability corresponding to the second relation in the quadruple meets a first condition, omit the first relation in the triple to obtain a triple from which the first relation is omitted; and
obtain the third set based on all the triples from which the first relation is omitted and all the triples from which the first relation is not omitted.

In a possible implementation, the processing module is further configured to:

for the at least one triple, select, from the at least one triple based on the probability corresponding to the second relation, all triples from which the first relation is omitted;

for each triple, if a first head entity in the triple is the same as a second head entity in a quadruple, a first tail entity in the triple is the same as a second tail entity in the quadruple, and a first relation in the triple is the same as a second relation in the quadruple, when a probability corresponding to the second relation in the quadruple is a largest one of all probabilities, omit the first relation in the triple to obtain a triple from which the first relation is omitted, where all the probabilities are probabilities corresponding to all second relations between the second head entity and the second tail entity in the quadruple; and

obtain the third set based on all the triples from which the first relation is omitted and all the triples from which the first relation is not omitted.

In a possible implementation, the processing module is further configured to:

for the at least one triple, select, from the at least one triple based on the probability corresponding to the second relation, all triples from which the first relation is omitted;

obtain, based on the first set and all triples that are in the first set and from which the first relation is omitted, all triples from which the first relation is not omitted;

obtain a fourth set and a fifth set, where the fourth set includes all the triples that are in the first set and from which the first relation is omitted, and the fifth set includes a triple in the first set other than the fourth set;

for several triples in the fifth set, select, from the several triples by using the fourth set as a condition, a triple from which the first relation is omitted and a triple from which the first relation is not omitted, to update the fourth set and the fifth set; and

obtain the third set based on an updated fourth set and an updated fifth set.

In a possible implementation, the processing module is further configured to:

for the at least one triple, select, from the at least one triple based on the probability corresponding to the second relation, all triples from which the first relation is omitted;

obtain, based on the first set and all triples that are in the first set and from which the first relation is omitted, all triples from which the first relation is not omitted;

obtain a fourth set and a fifth set, where the fourth set includes all the triples that are in the first set and from which the first relation is omitted, and the fifth set includes a triple in the first set other than the fourth set;

for several triples in the fifth set, calculate, for each of the several triples when the triple matches any quadruple in the second set, a conditional probability corresponding to the quadruple under a condition that any n triples in the fourth set exist, where n is a positive integer, and an initial value of n is 1;

when the conditional probability meets a second condition, omit a first relation in the triple to obtain an updated fourth set and an updated fifth set;

when a third condition is met, add 1 to n, and return to the step of calculating, for each of the several triples when the triple matches any quadruple in the second set, a conditional probability corresponding to the quadruple under a condition that any n triples in the fourth set exist; and

obtain the third set based on the updated fourth set and the updated fifth set.

In a possible implementation, the second condition includes:
The conditional probability corresponding to the quadruple is a largest one of all probabilities, where all the probabilities are conditional probabilities corresponding to all second relations between a second head entity and a second tail entity in the quadruple.

In this implementation, that a conditional probability corresponding to a first relation is a largest one of all conditional probabilities is used as a condition for omission, so that the receiving side can restore the first relation with the largest probability from the same second set based on the condition. This facilitates restoration of data.

In a possible implementation, the third condition includes at least one of the following:

n is less than a first value; and
a quantity of triples in the fourth set is less than a second value.

In a possible implementation, the processing module is further configured to:
determining the third set based on the probability corresponding to the second relation in the second set includes:

for the at least one triple, selecting, from the at least one triple based on the probability corresponding to the second relation, all triples from which the first relation is omitted;

obtaining, based on the first set and all triples that are in the first set and from which the first relation is omitted, all triples from which the first relation is not omitted;

when a quantity of all first relations omitted from the first set is less than a second value, continuing to perform a subsequent operation, where the second value is the maximum quantity of pieces of information omitted from the first set, and the second value is obtained based on a device capability, a time threshold, or a channel condition;

obtaining a fourth set and a fifth set, where the fourth set includes all the triples that are in the first set and from which the first relation is omitted, and the fifth set includes a triple in the first set other than the fourth set;

for several triples in the fifth set, selecting, from the several triples by using the fourth set as a condition, a triple from which the first relation is omitted and a triple from which the first relation is not omitted, to update the fourth set and the fifth set; and

obtaining the third set based on an updated fourth set and an updated fifth set.

In a possible implementation, the processing module is further configured to:
determine second information, where the second information indicates to send the third set by using transmit power.

In a possible implementation, the transceiver module is further configured to:
receive second information from the receiving side, where the second information indicates to send the third set by using transmit power.

According to a fifth aspect, this application provides a communication device, including:

a transceiver module, configured to receive a third set from a transmitting side, where the third set includes at least one 2-tuple, and the 2-tuple includes a first head entity and a first tail entity; and

a processing module, configured to determine a first set based on a probability corresponding to a second relation in a second set, where the second set includes at least one quadruple, each quadruple includes a second head entity, a second tail entity, a second relation between the second head entity and the second tail entity, and a probability corresponding to the second relation, the first set includes at least one triple, and each triple includes the first head entity, the first tail entity, and a first relation between the first head entity and the first tail entity.

In a possible implementation, the processing module is further configured to:
receive the second set.

In a possible implementation, the transceiver module is further configured to:
send the second set to the transmitting side.

In a possible implementation, the processing module is further configured to determine first information, where the first information indicates a maximum quantity of pieces of information omitted from the first set; and
the transceiver module is further configured to send the first information to a receiving side.

In a possible implementation, the transceiver module is further configured to:
receive first information from a receiving side, where the first information indicates a maximum quantity of pieces of information omitted from the first set.

In a possible implementation, determining the first set based on the probability corresponding to the second relation includes:

for the at least one 2-tuple in the third set, obtaining, based on the probability of the second relation, a first relation omitted from each of the at least one 2-tuple, to obtain the at least one triple; and

obtaining the first set based on all triples in the third set and the at least one triple.

In a possible implementation, the processing module is further configured to:
for each of the at least one 2-tuple, if a quadruple matching the 2-tuple is selected from the second set, when a probability corresponding to a second relation in the quadruple meets a first condition, add the second relation in the quadruple to the 2-tuple to obtain a triple.

In a possible implementation, a condition for selecting the quadruple matching the 2-tuple from the second set includes:
A first head entity in the 2-tuple is the same as a second head entity in the quadruple, and a first tail entity in the 2-tuple is the same as a second tail entity in the quadruple.

In a possible implementation, the first condition includes:
The probability corresponding to the second relation in the quadruple is a largest one of all probabilities, where all the probabilities are probabilities corresponding to all second relations between the second head entity and the second tail entity in the quadruple.

According to a sixth aspect, this application provides a communication device, including a processor and an interface circuit. The interface circuit is configured to receive a signal from another communication device and transmit the signal to the processor, or send a signal from the processor to another communication device. The processor is configured to implement the methods in the first aspect to the third aspect through a logic circuit or by executing code instructions.

According to a seventh aspect, this application provides a communication system, including at least one communication device. The communication device performs the methods in the first aspect to the third aspect.

According to an eighth aspect, this application provides a computer program product. When the computer program product is run on a computer, the computer is enabled to perform the methods in the first aspect to the third aspect.

According to a ninth aspect, this application provides a chip system. The chip system includes a processor, configured to implement the methods in the first aspect to the third aspect. In a possible design, the chip system further includes a memory, configured to store program instructions and/or data. The chip system may include a chip, or may include a chip and another discrete component.

According to a tenth aspect, this application provides a computer-readable storage medium. The storage medium stores a computer program or instructions. When the computer program or the instructions are executed by a communication device, the methods in the first aspect to the third aspect are implemented.

According to an eleventh aspect, this application provides a communication device, including a processor. The processor is configured to execute a computer program or instructions in a memory, to implement the methods in the first aspect to the third aspect.

The solutions in the second aspect to the eleventh aspect are used to implement or cooperatively implement the method in the first aspect, and therefore can achieve beneficial effects the same as or corresponding to those in the first aspect. Details are not described herein again.

## BRIEF DESCRIPTION OF DRAWINGS

FIG. 1a is a diagram of an architecture of a communication system to which an embodiment of this application is applied;

FIG. 1b is a diagram of another architecture of a communication system to which an embodiment of this application is applied;

FIG. 1c is a diagram of an architecture of a semantic communication technology;

FIG. 1d is a diagram of a knowledge graph;

FIG. 1e is a diagram of an architecture of semantic communication based on a knowledge graph;

FIG. 2 is a schematic flowchart of a semantic communication method according to an embodiment of this application;

FIG. 3 is another schematic flowchart of a semantic communication method according to an embodiment of this application;

FIG. 4 is a diagram of a probability map according to an embodiment of this application;

FIG. 5 is a diagram of omitting a first relation according to an embodiment of this application;

FIG. 6 is a schematic flowchart of performing semantic information processing by a transmitting side according to an embodiment of this application;

FIG. 7 is a diagram of a structure of a communication device according to an embodiment of this application;

FIG. 8 is a diagram of another structure of a communication device according to an embodiment of this application;

FIG. 9 is a diagram of another structure of a communication device according to an embodiment of this application;

FIG. 10 is a diagram of another structure of a communication device according to an embodiment of this application; and

FIG. 11 is a diagram of another structure of a communication device according to an embodiment of this application.

## DESCRIPTION OF EMBODIMENTS

The following clearly and completely describes the technical solutions in embodiments of this application with reference to the accompanying drawings in embodiments of this application. Clearly, the described embodiments are merely some but not all of embodiments of this application. All other embodiments obtained by a person skilled in the art based on embodiments of this application without creative efforts shall fall within the protection scope of this application. It can be learned by a person skilled in the art that the technical solutions provided in embodiments of this application are also applicable to similar technical problems with development of technologies and emergence of a new scenario.

In this specification, the claims, and the accompanying drawings of this application, the terms "first", "second", and the like are intended to distinguish between similar objects but do not necessarily indicate a specific order or sequence. It should be understood that data used in this way is interchangeable in proper circumstances, so that embodiments described herein can be implemented in an order other than the order illustrated or described herein. In addition, the terms "include", "have", and any variants thereof are intended to cover non-exclusive inclusion. For example, a process, method, system, product, or device including a series of steps or modules is not necessarily limited to those clearly listed steps or modules, but may include other steps or modules that are not clearly listed or are inherent to the process, method, product, or device.

The term "and/or" in this application describes only an association relationship between associated objects, and indicates that three relationships may exist. For example, A and/or B may indicate the following three cases: Only A exists, both A and B exist, and only B exists. In addition, the character "/" in this application usually indicates an "or" relationship between the associated objects.

It should be further noted that, in some alternative implementations, the specified functions/actions may not appear in sequences of the accompanying drawings. For example, actually, two accompanying drawings shown in succession may essentially occur simultaneously or may sometimes be performed in a reverse sequence, depending on the related functions/actions.

In embodiments of this application, unless otherwise specified, "at least one" means one or more, and "a plurality of" means two or more. It can be understood that, in this application, "when", "provided that", and "if" mean that an apparatus performs corresponding processing in an objective case, but are not intended to limit time. In addition, the terms do not mean that the apparatus needs to perform a determining action during implementation, and do not mean any other limitation either. In addition, the specific term "example" means "being used as an example, embodiment, or illustration". Any embodiment described as an "example" is not necessarily construed as being superior to or better than other embodiments.

The following describes embodiments of this application with reference to the accompanying drawings. It can be learned by a person of ordinary skill in the art that the technical solutions provided in embodiments of this application are also applicable to similar technical problems with development of technologies and emergence of a new scenario.

First, to better understand the solutions in embodiments of this application, the following describes an application scenario of embodiments of this application.

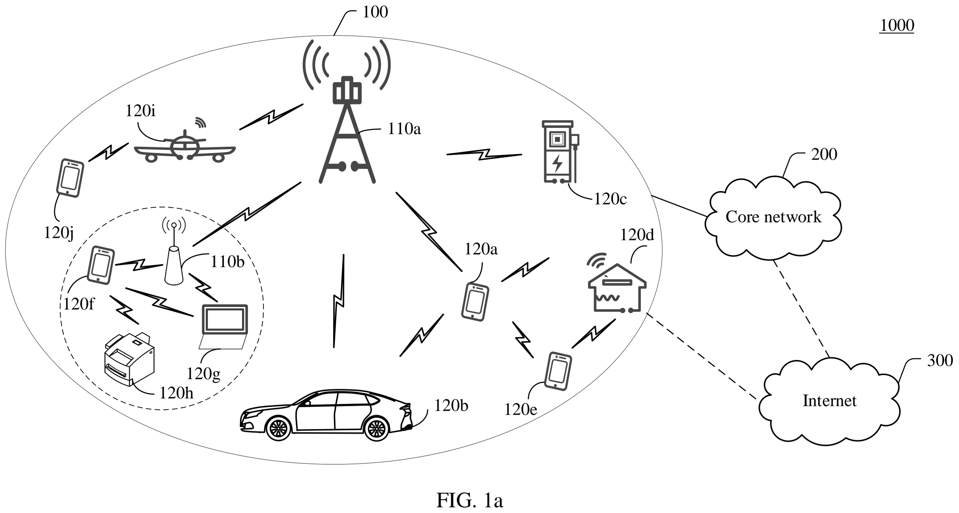

FIG. 1a is a diagram of an architecture of a communication system to which an embodiment of this application is applied. As shown in FIG. 1a, the communication system 1000 includes a radio access network 100 and a core network 200. Optionally, the communication system 1000 may further include an internet 300. The radio access network 100 may include at least one network device (for example, 110a and 110b in FIG. 1a), and may further include at least one terminal device (for example, 120a to 120j in FIG. 1a). The terminal device is connected to the network device in a wireless manner, and the network device is connected to the core network in a wireless or wired manner. A core network device and the network device may be different physical devices that are independent of each other, or functions of the core network device and logical functions of the network device may be integrated into a same physical device, or some functions of the core network device and some functions of the network device may be integrated into one physical device. Terminal devices may be connected to each other in a wired or wireless manner, and network devices may be connected to each other in a wired or wireless manner. FIG. 1a is merely a diagram. The communication system may further include other network devices, for example, may further include a wireless relay device and a wireless backhaul device that are not shown in FIG. 1a.

The network device is an access device used by the terminal device to access the communication system in a wireless manner. The network device may be a base station (base station), an evolved NodeB (evolved NodeB, eNodeB), a transmission and reception point (transmission reception point, TRP), a next-generation NodeB (next-generation NodeB, gNB) in a fifth-generation (5th generation, 5G) mobile communication system, a next-generation base station in a sixth-generation (6th generation, 6G) mobile communication system, a base station in a future mobile communication system, an access node in a Wi-Fi system, or the like; or may be a module or a unit that performs some functions of a base station, for example, may be a central unit (central unit, CU) or a distributed unit (distributed unit, DU). The CU herein performs functions of a radio resource control protocol and a packet data convergence protocol (packet data convergence protocol, PDCP) of the base station, and may further perform a function of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1a), or may be a micro base station or an indoor base station (for example, 110b in FIG. 1a), or may be a relay node, a donor node, or the like. A specific technology and a specific device form that are used by the network device are not limited in embodiments of this application.

The terminal device is a device with a wireless transceiver function, and may send a signal to the network device, or receive a signal from the network device. The terminal device may also be referred to as user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer (Pad), a computer with a wireless transceiver function, a wearable device, a vehicle, a vehicle-mounted mobile apparatus, an airplane, a ship, a robot, a robot arm, a personal digital assistant, a wearable device, a virtual reality (virtual reality, VR) device, an augmented reality (augmented reality, AR) device, various internet of things devices, or the like. A specific technology and a specific device form that are used by the terminal device are not limited in embodiments of this application.

The network device and the terminal device may be at fixed locations, or may be movable. The network device and the terminal device may be deployed on land, including being deployed indoors or outdoors, or in a handheld manner or a vehicle-mounted manner; or may be deployed on water; or may be deployed on an airplane, a balloon, and an artificial satellite. Application scenarios of the network device and the terminal device are not limited in embodiments of this application.

Roles of the network device and the terminal device may be relative roles. For example, the helicopter or uncrewed aerial vehicle 120i in FIG. 1a may be configured as a mobile network device. For the terminal device 120j that accesses the radio access network 100 through 120i, the terminal device 120i is a network device. However, for the network device 110a, 120i is a terminal device. To be specific, 110a and 120i communicate with each other through a radio air interface protocol. Certainly, 110a and 120i may alternatively communicate with each other through an interface protocol between network devices. In this case, for 110a, 120i is also a network device. Therefore, both the network device and the terminal device may be collectively referred to as communication devices. 110a and 110b in FIG. 1a may be referred to as communication devices with a function of a network device, and 120a to 120j in FIG. 1a may be referred to as communication devices with a function of a terminal device.

Communication may be performed between the network device and the terminal device, between network devices, or between terminal devices by using a licensed spectrum, an unlicensed spectrum, or both a licensed spectrum and an unlicensed spectrum; and may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the network device may alternatively be performed by a module (for example, a chip) in the network device, or may be performed by a control subsystem including the function of the network device. The control subsystem including the function of the network device herein may be a control center in the foregoing application scenarios, such as the smart grid, the industrial control, the smart transportation, and the smart city. A function of the terminal device may alternatively be performed by a module (for example, a chip or a modem) in the terminal device, or may be performed by an apparatus including the function of the terminal device.

A semantic communication method provided in embodiments of this application is applicable to downlink (downlink, DL) data transmission, uplink (uplink, UL) data transmission, or device-to-device (device-to-device, D2D) data transmission. For the downlink data transmission, a sending device is a network device, and a corresponding receiving device is a terminal device. For the uplink data transmission, a sending device is a terminal device, and a corresponding receiving device is a network device. For the D2D data transmission, a sending device is a terminal device, and a corresponding receiving device is also a terminal device. A device corresponding to a transmitting side and a device corresponding to a receiving side are not limited in embodiments of this application. To be specific, communication between the transmitting side and the receiving side may be performed between network devices, between terminal devices, or between a network device and a terminal device.

The semantic communication method provided in embodiments of this application is applicable to a communication system in which a hybrid automatic repeat request (hybrid automatic repeat request, HARQ) technology is used, a frequency division duplex (frequency division duplex, FDD) system, or a time division duplex (time division duplex, TDD) system. The semantic communication method provided and described in embodiments of this application is applicable to any communication system in which a low-density parity-check (low-density parity-check, LDPC) code, a polar code (polar code), or the like is used as a data channel coding mode, or a 5G communication system and another wireless communication system. This is not limited in embodiments of this application.

Communication may be performed between a network device and a terminal device and between terminal devices over licensed spectrums (licensed spectrum), unlicensed spectrum (unlicensed spectrum)s, or both licensed spectrums and unlicensed spectrums. Communication may be performed between an access network device and a terminal device and between terminal devices by using a spectrum below 6G, a spectrum above 6G, or both a spectrum below 6G and a spectrum above 6G. A spectrum resource used between the network device and the terminal device is not limited in embodiments of this application.

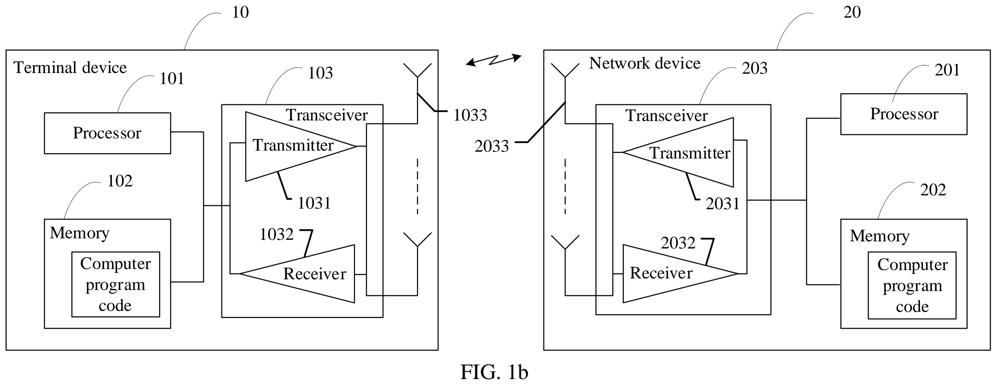

In addition, communication between each network device and each terminal device in the communication system shown in FIG. 1a may alternatively be represented in another form. FIG. 1b is a diagram of another architecture of a communication system to which an embodiment of this application is applied. A terminal device 10 includes a processor 101, a memory 102, and a transceiver 103. The transceiver 103 includes a transmitter 1031, a receiver 1032, and an antenna 1033. A network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033. The transmitter 1031 may be configured to send transmission feedback information to the network device 20 through the antenna 1033. The transmitter 2031 may be configured to send transmission control information to the terminal device 10 through the antenna 2033. The receiver 2032 may be configured to receive, through the antenna 2033, transmission feedback information sent by the terminal device 10.

It should be understood that the communication scenarios shown in FIG. 1a and FIG. 1b are merely examples, and quantities of terminal devices and network devices in a communication system are not specifically limited in this application. The semantic communication method provided in embodiments of this application may be applied to but is not limited to the foregoing described structures. This is not limited herein.

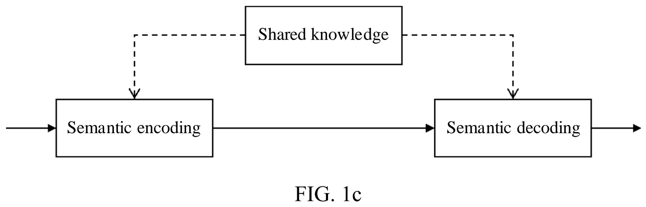

In the communication scenarios shown in FIG. 1a and FIG. 1b, a main application scenario of embodiments of this application is that data is transmitted between a transmitting side and a receiving side based on a semantic communication technology. Semantic communication is used to transmit semantic information. For example, FIG. 1c is a diagram of an architecture of a semantic communication technology. As shown in FIG. 1c, a key difference between semantic communication and a conventional communication technology lies in that semantic encoding is introduced in the semantic communication. During the semantic communication, a semantic feature of data of a transmitting side is captured based on a task to be performed by a receiving side, and only an important semantic feature is transmitted. This greatly reduces needed communication resources. The transmitting side performs semantic encoding on data, and then sends encoded data to the receiving side. The receiving side obtains the data through semantic decoding. In addition, during the semantic communication, the transmitting side and the receiving side need to have shared background knowledge and have a common understanding of extracted semantic information.

It should be understood that transmission in this application may be sending or receiving.

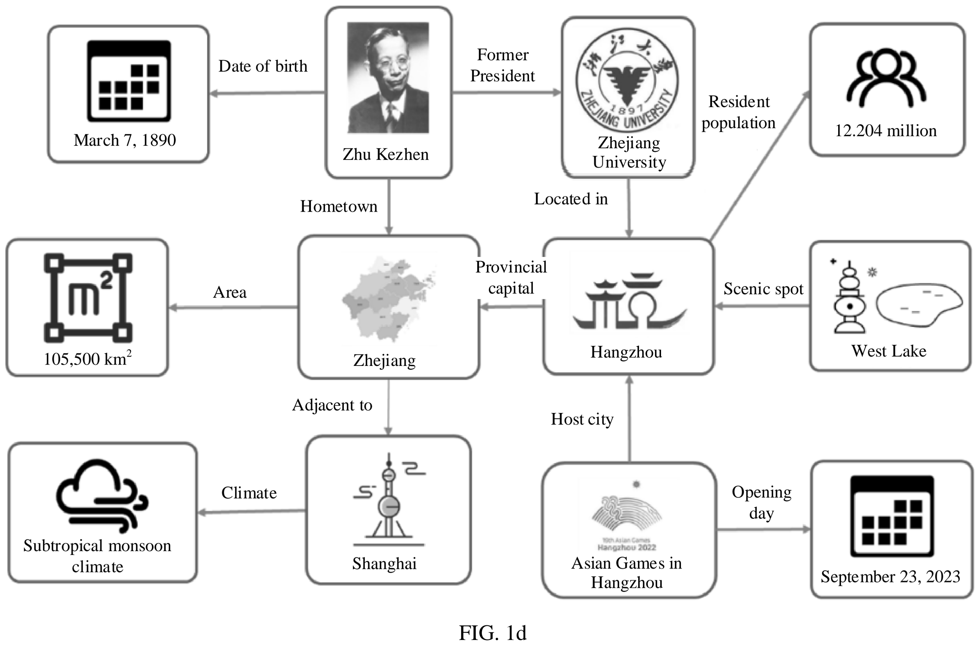

As a structured form of knowledge, a knowledge graph (knowledge graph, KG), is an important technical means of semantic information representation. The knowledge graph consists of entities (entity) and relations (relation). The entities may be objects in the real world or abstract concepts. The relations represent specific relations among entities. Specific examples of the entity and the relation are shown in FIG. 1d. FIG. 1d is a diagram of a knowledge graph. Knowledge in the knowledge graph may be represented by a triple (head entity, relation, tail entity), for example, (Hangzhou, scenic spot, West Lake), and (Zhejiang, provincial capital, Hangzhou). A structured knowledge graph may be constructed by extracting entity and relation information from unstructured text data.

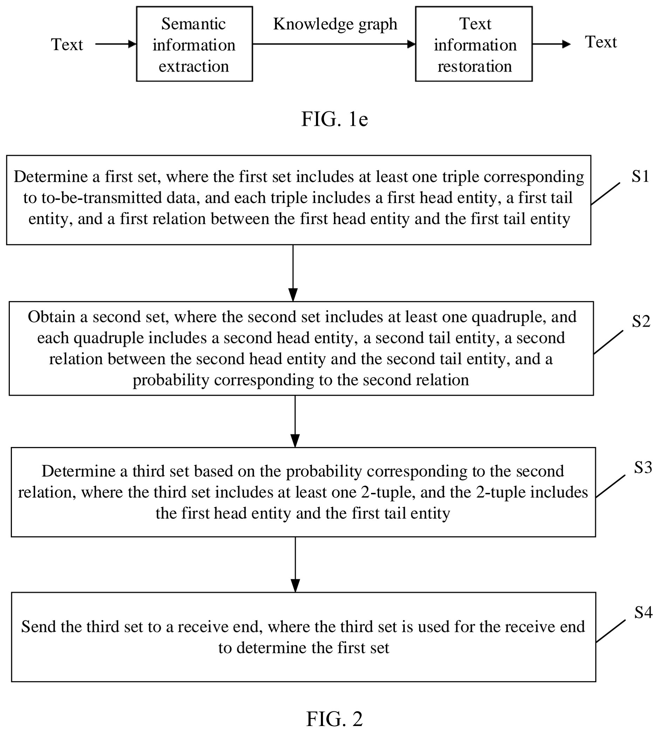

In current semantic communication technologies, for example, FIG. 1e is a diagram of an architecture of semantic communication based on a knowledge graph. In FIG. 1e, during data transmission, semantic information corresponding to data may be modeled by using a knowledge graph, and a transmitting side may represent the data based on the knowledge graph, and send the knowledge graph to a receiving side. After receiving the knowledge graph, the receiving side may restore original data or perform subsequent intelligent tasks.

However, in the foregoing solution, all information in the knowledge graph is usually sent to the receiving side, leading to a large amount of transmitted data. Specifically, in different semantic communication scenarios, a relation between different entities in a triple correspondingly has different frequency or certainty. If all extracted semantic information (that is, the knowledge graph) is directly transmitted, a specific degree of redundancy exists. Consequently, some unnecessary semantic information is transmitted in specific scenarios, leading to a large amount of transmitted data. Higher occurrence frequency or a higher probability of a relation between entities indicates higher certainty.

To resolve the foregoing problem, embodiments of this application provide a semantic communication method and a related apparatus. The semantic communication method is applied to the network device (110a and 110b) or the terminal device (120a to 120j) shown in FIG. 1a, or a chip, a chip system, a processor, or the like that supports the network device or the terminal device in implementing the method.

Specifically, FIG. 2 is a schematic flowchart of a semantic communication method according to an embodiment of this application. The method is mainly applied to a network device or a terminal device. The method specifically includes the following steps. S1: Determine a first set, where the first set includes at least one triple corresponding to to-be-transmitted data, and each triple includes a first head entity, a first tail entity, and a first relation between the first head entity and the first tail entity. S2: Obtain a second set, where the second set includes at least one quadruple, and each quadruple includes a second head entity, a second tail entity, a second relation between the second head entity and the second tail entity, and a probability corresponding to the second relation. Optionally, the second set may be obtained from a receiving side or another node; or the second set may be determined based on sample data, and the second set is sent to a transmitting side. S3: Determine a third set based on the probability corresponding to the second relation, where the third set includes at least one 2-tuple, and the 2-tuple includes the first head entity and the first tail entity. S4: Send the third set to the receiving side, where the third set is used for the receiving side to determine the first set. Optionally, the third set is used for the receiving side to determine the first set based on the second set.

In this application, in comparison with directly sending the first set corresponding to the to-be-transmitted data, the first relation that may be omitted from the first set is determined based on the probability corresponding to the second relation, and the third set from which the first relation is omitted is sent, to reduce an amount of transmitted data, and reduce a communication delay. In addition, the same second set is shared with the receiving side, so that the receiving side can restore, based on the second set, the first relation omitted from the third set, to obtain the complete first set.

For ease of understanding, the following describes in detail the semantic communication method provided in embodiments of this application with reference to the accompanying drawings and application scenarios. It can be learned by a person of ordinary skill in the art that the technical solutions provided in embodiments of this application are also applicable to similar technical problems with development of technologies and emergence of a new scenario.

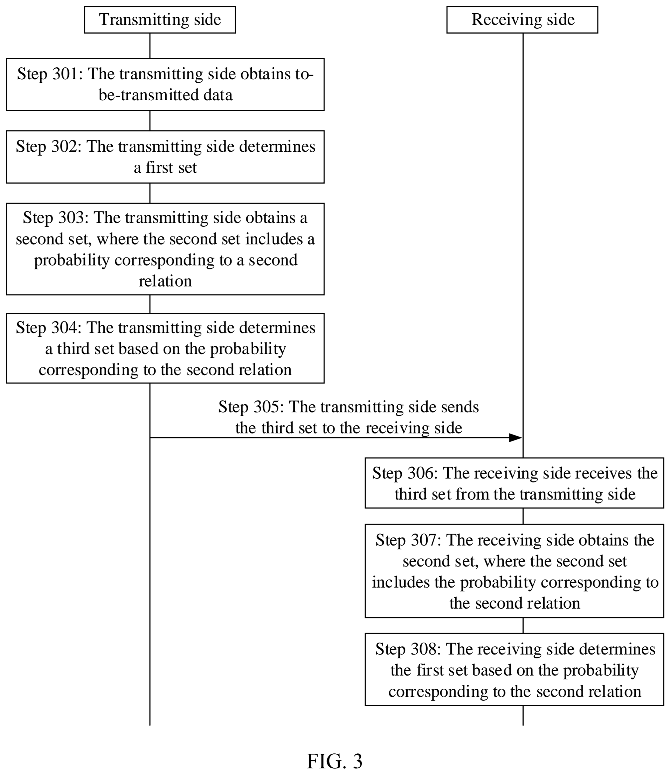

FIG. 3 is another schematic flowchart of a semantic communication method according to an embodiment of this application. The data processing method may be performed by the network device or the terminal device shown in FIG. 1a. For ease of description, a transmitting side and a receiving side are used as execution entities for description. The transmitting side may be a network device or a terminal device, and the receiving side may also be a network device or a terminal device. This is not limited herein. As shown in FIG. 3, the method includes the following step 301 to step 308.

Step 301: The transmitting side obtains to-be-transmitted data.

In this embodiment, a type of the to-be-transmitted data may be a plurality of types of data such as text and an image. The transmitting side may transmit different types of data based on specific application scenarios and requirements. This is not limited herein.

Step 302: The transmitting side determines a first set.

In this embodiment, the transmitting side may determine the first set from the to-be-transmitted data. The first set may be understood as a constructed knowledge graph or a set of triples. Semantic information of the knowledge graph is expressed by using a triple. The triple is usually in a form of (a first head entity, a first relation, a first tail entity), and is specifically, for example, (vehicle, left adjacent to, pedestrian). The transmitting side may extract several triples in this form from source data such as text or an image, and the several triples may be represented as a knowledge graph.

Step 303: The transmitting side obtains a second set, where the second set includes a probability corresponding to a second relation.

In this embodiment, the second set may be understood as a set of quadruples, may also be referred to as a shared probability map, and is shared between the transmitting side and the receiving side. The quadruple is obtained by adding content representing a probability of a relation between a head entity and a tail entity to the triple. A quadruple corresponding to the second set is usually in a form of (a second head entity, a second relation, a probability of the second relation, a second tail entity).

The second set may be locally constructed by the transmitting side, or may be received from the outside. Optionally, the transmitting side receives the second set from the receiving side or another node.

In an optional implementation, the second set may be constructed by using sample data.

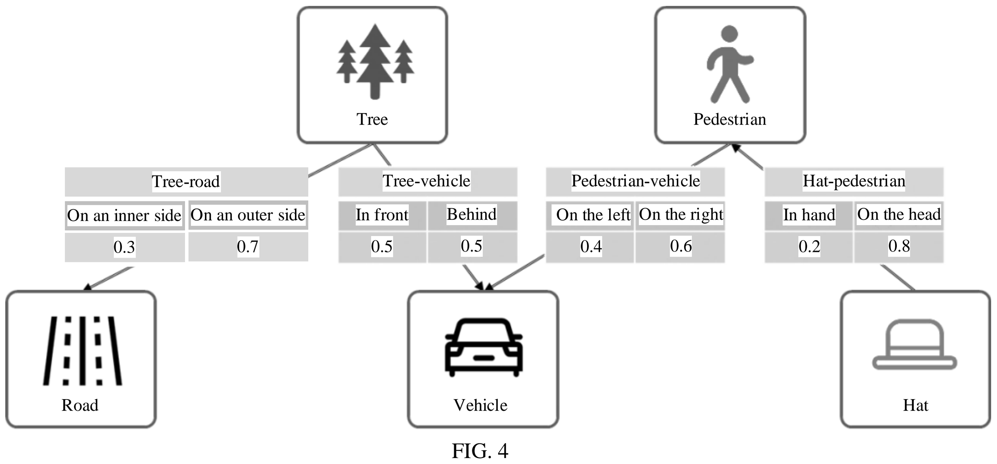

In this implementation, when there are many pieces of text with similar subjects, head entities and tail entities in some triples corresponding to the text are the same, but specific relations may be different. A specific example is shown in FIG. 4. FIG. 4 is a diagram of a probability map according to an embodiment of this application. For example, text data 1 includes the following triple: (pedestrian, on the left, vehicle); and text data 2 includes the following triple: (pedestrian, on the right, vehicle). The two triples may be combined and represented as {pedestrian, [(on the left, 0.4), (on the right, 0.6)], vehicle}. A number next to a relation indicates occurrence frequency of the relation. When there are many pieces of text data with similar subjects, knowledge graphs corresponding to the text data may be combined into a knowledge graph in a form of a probability map by using the same method. In this case, an edge in the knowledge graph is not a uniquely determined relation edge, but is a probability edge obtained by combining different relation occurrence probabilities.

Specifically, before communication formally starts, a probability map may be first constructed based on a large quantity of samples. After the probability map is constructed, the probability map is shared between the transmitting side and the receiving side as common background knowledge. This process needs to be performed only once. After the operation is completed, communication formally starts, to transmit data.

Optionally, the following describes an example method for constructing the probability map.

The sample data is represented as follows:

$$\mathcal{T} = \{T_1, T_2, \ldots, T_n, \ldots, T_N\}$$

N indicates a total quantity of pieces of sample data, and $\mathcal{T}$ indicates a sample data set. A knowledge graph extracted from the sample data n is represented as follows:

$$G_n = \{\varepsilon_n^1, \varepsilon_n^2, \ldots, \varepsilon_n^m, \ldots \varepsilon_n^M\}$$

$\varepsilon_n^m$ indicates an *mth* triple in the knowledge graph $G_n$, and M indicates a total quantity of triples. The triple $\varepsilon_n^m$ may be specifically written in the following form:

$$\varepsilon_n^m = (h_n^m, r_n^m, t_n^m)$$

$h_n^m$ is a head entity in the triple $\varepsilon_n^m$, $r_n^m$ is a relation in $\varepsilon_n^m$, and $t_n^m$ is a tail entity in $\varepsilon_n^m$.

The shared probability map is written as follows:

$$GS = \{\delta_1, \delta_2, \ldots, \delta_s, \ldots, \delta_S\}$$

$\delta_s$ is a quadruple in which a relation probability is added, and $S$ is a total quantity of quadruples. $\delta_s$ is specifically as follows:

$$\delta_s = \left\{ h_s, \left[ (r_s^1, \mathcal{N}_s^1), (r_s^2, \mathcal{N}_s^2), \ldots, (r_s^i, \mathcal{N}_s^i), \ldots, (r_s^I, \mathcal{N}_s^I) \right], t_s \right\}$$

$h_s$ is a head entity in the quadruple $\delta_s$. $t_s$ is a tail entity in $\delta_s$. $r_s^i$ is a relation between the head entity and the tail entity. I is a total quantity of relations between the head entity and the tail entity. $\mathcal{N}_s^i$ is a set of identifiers of samples in which the triple ($h_s$, $r_s^i$, $t_s$) appears.

The transmitting side may directly construct the second set based on the sample data, and send the second set to the transmitting side. To be specific, the transmitting side is responsible for constructing the second set. After constructing the second set by using the foregoing method, the transmitting side sends the second set to the receiving side, so that the two ends share the same probability map.

Alternatively, the transmitting side may receive the second set from the receiving side. To be specific, the receiving side is responsible for constructing the second set. After constructing the second set by using the foregoing method, the receiving side sends the second set to the transmitting side, so that the two ends share the same probability map.

An execution sequence of step 302 and step 303 is not limited.

Step 304: The transmitting side determines a third set based on the probability corresponding to the second relation in the second set.

In this embodiment, after obtaining the first relation and the second relation, the transmitting side uses the second set as shared knowledge to compress semantic information. Specifically, the transmitting side may determine the third set based on the probability corresponding to the second relation in the second set. In an optional implementation, that the transmitting side determines the third set based on the probability corresponding to the second relation in the second set includes:

For at least one triple, the transmitting side selects, from the at least one triple based on the probability corresponding to the second relation, all triples from which the first relation is omitted;

the transmitting side obtains, based on the first set and all triples that are in the first set and from which the first relation is omitted, all triples from which the first relation is not omitted; and
the transmitting side obtains the third set based on all the triples from which the first relation is omitted and all the triples from which the first relation is not omitted.

In this implementation, after obtaining the second set, the transmitting side may select, from the first set based on the probability corresponding to the second relation in the second set, a triple from which omission is performed. A remaining triple, among triples, from which no omission is performed and the triple from which omission is performed form the third set.

For example, before data is transmitted, semantic information, to be specific, a knowledge graph corresponding to the data, is first extracted from the data. The knowledge graph is denoted as G and is written as follows:

$$G = \{\varepsilon_1, \varepsilon_2, \ldots, \varepsilon_j, \ldots, \varepsilon_J\}$$

$\varepsilon_j$ indicates a jth triple in the knowledge graph G, and J indicates a total quantity of triples. The triple $\varepsilon_j$ may be specifically written in the following form:

$$\varepsilon_j = \left( h_j, r_j, t_j \right)$$

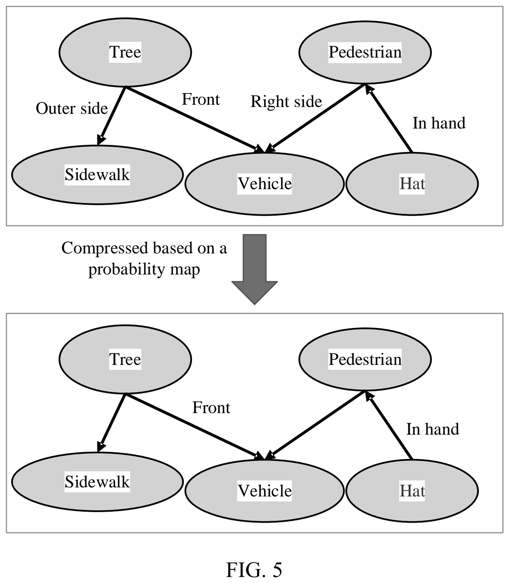

Specifically, FIG. 5 is a diagram of omitting a first relation according to an embodiment of this application. As shown in FIG. 5, the first set includes the following triples: (tree, outer side, sidewalk), (tree, front, vehicle), (pedestrian, right side, vehicle), and (pedestrian, in hand, hat). The transmitting side compares the first set (the knowledge graph G) with the second set (the shared probability map *GS*), and omits first relations, for example, the outer side and the right side, in a part of triples in the knowledge graph G, to obtain the third set including a 2-tuple and a triple. In this case, the third set may be in a form of (tree, sidewalk), (tree, front, vehicle), (pedestrian, vehicle), and (pedestrian, in hand, hat).

The probability of the second relation may be calculated based on $\mathcal{N}_s^i$. $\mathcal{N}_s^i$ indicates a set of identifiers of samples in which the second relation $r_s^i$ exists or is known. Triples with a same second head entity and a same second tail entity may include a plurality of relations. The transmitting side collects statistics on a set of identifiers of samples of second relations between a same second head entity and a same second tail entity, and divides a quantity of samples in which the second relation $r_s^i$ exists or is known by a total quantity of samples of second relations, to obtain a probability or frequency of the second relation.

In an optional implementation, for each triple, if the transmitting side selects a quadruple matching the triple from the second set, when a probability corresponding to a second relation in the quadruple meets a first condition, the transmitting side omits a first relation in the triple to obtain a triple from which the first relation is omitted.

In this implementation, for each triple in the first set, if a matching quadruple is selected from the second set, the transmitting side further determines whether a probability corresponding to a second relation in the quadruple meets the first condition. If the condition is met, the transmitting side may omit a first relation in the triple. Optionally, a condition for selecting, by the transmitting side, the quadruple matching the triple from the second set includes:

A first head entity in the triple is the same as a second head entity in the quadruple;

a first tail entity in the triple is the same as a second tail entity in the quadruple; and
the first relation in the triple is the same as the second relation in the quadruple.

Optionally, the first condition includes:
The probability corresponding to the second relation in the quadruple is a largest one of all probabilities, where all the probabilities are probabilities corresponding to all second relations between the second head entity and the second tail entity in the quadruple.

Specifically, the transmitting side omits the second relation with the largest probability. In this way, when receiving only a 2-tuple, to be specific, receiving only the first head entity and the first tail entity without receiving the first relation, the receiving side generates, by default, a triple by using a second relation that has a largest probability and that corresponds to a second head entity and a second tail entity in a quadruple that are the same as the first head entity and the first tail entity.

It can be understood that the transmitting side omits the largest value, rather than a smallest value, of the probability of the second relation due to the following reason: There may be no relation between a part of entities in the second set. In this case, the probability of the second relation is zero. If the smallest value is used as the first condition, a unique second relation cannot be selected, and consequently, the receiving side restores the omitted first relation based on the condition.

For example, in a first round, for any $\varepsilon_j$, if $\delta_s$ that makes $h_j = h_s$ and $t_j = t_s$ exists in GS, a relation set of $\delta_s$ is searched to determine whether a relation $r_s^i$ that makes $r_s^i = r_j$ exists. If a relation $r_s^i$ that makes $r_s^i = r_j$ exists, whether a corresponding relation probability $p\left( h_s, r_s^i, t_s \right)$ is a largest one in a relation probability set $P_s$ is further determined. $P_s$ may be written as follows:

$$P_s = \left\{ p(h_s, r_s^1, t_s), p(h_s, r_s^2, t_s), \ldots, p\left( h_s, r_s^i, t_s \right), \ldots, p\left( h_s, r_s^I, t_s \right) \right\}$$

If $p\left( h_s, r_s^i, t_s \right)$ is the largest one in the relation probability set $P_s$, $r_j$ in the triple $\varepsilon_j = (h_j, r_j, t_j)$ is omitted during transmission, and only a head entity and a tail entity are transmitted, to reduce an amount of transmitted data. If no $\delta_s$ that makes $h_j = h_s$ and $t_j = t_s$ exists in GS, or if $\delta_s$ that makes $h_j = h_s$ and $t_j = t_s$ exists in GS but no relation $r_s^i$ that makes $r_s^i = r_j$ exists in the relation set of $\delta_s$, the triple needs to be completely transmitted.

After completing the first round of relation filtering, the transmitting side may further select, from all triples from which the first relation is not omitted by using all triples from which the first relation is omitted as a condition, a triple from which the first relation may be omitted, and continue to perform a second round of operation.

Optionally, the transmitting side obtains a fourth set and a fifth set, where the fourth set includes all the triples that are in the first set and from which the first relation is omitted, and the fifth set includes a triple in the first set other than the fourth set;

for several triples in the fifth set, the transmitting side selects, from the several triples by using the fourth set as a condition, a triple from which the first relation is omitted and a triple from which the first relation is not omitted, to update the fourth set and the fifth set; and
the transmitting side obtains the third set based on an updated fourth set and an updated fifth set.

Specifically, after selecting, from the first set based on the first condition, a part of triples from which the first relation is omitted, the transmitting side may use a 2-tuple that is selected in the first round and in which the first relation is omitted as the fourth set, and further select, from the fifth set by using the fourth set as a condition, a triple from which the first relation may be omitted, to further reduce an amount of transmitted data.

Optionally, if the transmitting side selects no quadruple matching the triple from the second set, the transmitting side sends the first set to the receiving side.

For example, after obtaining the set of quadruples, the transmitting side may calculate a multidimensional conditional probability distribution in a case in which a plurality of pieces of information exist. A method is as follows.

In the absence of any known information, a probability that the triple $(h_s, r_s^i, t_s)$ exists or is known may be written as follows:

$$p\left(h_s, r_s^i, t_s\right) = \frac{\text{num}\left(\mathcal{N}_s^i\right)}{\sum_{i=1}^{I} \text{num}\left(\mathcal{N}_s^i\right)}$$

$\text{num}\left(\mathcal{N}_s^i\right)$ is a total quantity of identifiers of samples in a set $\mathcal{N}_s^i$.

If it is known that the triple $(h_s, r_s^i, t_s)$ exists or is known, a conditional probability that the triple $(h_k, r_k^i, t_k)$ exists or is known may be written as follows:

$$p\left[\left(h_k, r_k^i, t_k\right) | \left(h_s, r_s^i, t_s\right)\right] = \frac{\text{num}\left(\mathcal{N}_k^i \cap \mathcal{N}_s^i\right)}{\text{num}\left[\mathcal{N}_s^i \cap \left(\cup_{i=1}^{I} \mathcal{N}_k^i\right)\right]}$$

$\mathcal{N}_k^i \cap \mathcal{N}_s^i$ is an intersection set of a set $\mathcal{N}_k^i$ and a set $\mathcal{N}_s^i$, and $\cup_{i=1}^{I} \mathcal{N}_k^i$ is a union set of a set $\mathcal{N}_k^1$ to a set $\mathcal{N}_k^I$.

By analogy, it is not difficult to obtain a multidimensional conditional probability that the triple $(h_k, r_k^i, t_k)$ exists or is known when it is known that N triples exist or are known:

$$p\left[\left(h_k, r_k^i, t_k\right) | \mathcal{C}_N\right] = \frac{\text{num}\left[\mathcal{N}_k^i \cap \left(\cap_{\mathcal{N} \subset \mathcal{C}_N} \mathcal{N}\right)\right]}{\text{num}\left[\left(\cap_{\mathcal{N} \subset \mathcal{C}_N} \mathcal{N}\right) \cap \left(\cup_{i=1}^{I} \mathcal{N}_k^i\right)\right]}$$

$\mathcal{C}_N$ indicates a set of conditions for determining that N triples exist, and $\cap_{\mathcal{N} \subset \mathcal{C}_N} \mathcal{N}$ indicates an intersection set of all sample label sets that meet the condition $\mathcal{C}_N$.

Optionally, the transmitting side calculates, for each of the several triples when the triple matches any quadruple in the second set, a conditional probability corresponding to the quadruple under a condition that any n triples in the fourth set exist, where n is a positive integer, and an initial value of n is 1;

when the conditional probability meets a second condition, the transmitting side omits a first relation in the triple to obtain an updated fourth set and an updated fifth set; and

when a third condition is met, the transmitting side adds 1 to n, and returns to the step of calculating, for each of the several triples when the triple matches any quadruple in the second set, a conditional probability corresponding to the quadruple under a condition that any n triples in the fourth set exist.

Specifically, because semantic relations in a part of triples are omitted in the first round, these triples may be used as a condition for a second round of conditional probability search. A second round of comparison is similar to a first round of comparison. A set of triples from which no omission is performed in the first round and that do not necessarily need to be completely transmitted is written as follows:

$$G^1 = \{\varepsilon_1, \varepsilon_2, \ldots, \varepsilon_a, \ldots, \varepsilon_A\}$$

A set of triples from which omission is performed in the first round are written as follows:

$$O^1 = \{\varepsilon_1, \varepsilon_2, \ldots, \varepsilon_b, \ldots, \varepsilon_B\}$$

For any $\varepsilon_a$ in $G^1$, under a condition that any triple $\varepsilon_b$ in $O^1$ is known or exists, a conditional probability of $\varepsilon_a$ is calculated. Assuming that $\varepsilon_a$ corresponds to $(h_a, r_a^i, t_a)$ in the shared probability map, the conditional probability of $\varepsilon_a$ may be written as $p\left[\left(h_a, r_a^i, t_a\right) | \varepsilon_b\right]$, and whether the conditional probability is a largest one in the following conditional probability set is determined:

$$\left\{ p[(h_a, r_a^1, t_a) | \varepsilon_b], \ldots, p\left[\left(h_a, r_a^i, t_a\right) | \varepsilon_b\right], \ldots, p[(h_a, r_a^I, t_a) | \varepsilon_b] \right\}$$

If the conditional probability is the largest one, a semantic relation $r_a^i$ in $\varepsilon_a$ is also omitted during transmission. If the conditional probability is not the largest one, a condition is replaced with another triple in $O^1$, and the foregoing operations are repeated until a triple in $O^1$ is completely used as a condition. This operation is denoted as a first sub-round in the second round of comparison. After the foregoing operations are completed once, a quantity of triples from which no omission is performed decreases, the triples from which no omission is performed form a new $G^1$, a triple from which omission is newly performed is updated to $O^1$, and the foregoing operations continue to be performed until there is no new triple from which omission may be performed.

It can be understood that, with an increase in a quantity of rounds, a quantity of triples used as a condition correspondingly increases. For example, two triples are used as a condition for calculating a conditional probability in a third round, three triples are used as a condition for calculating a conditional probability in a fourth round, and so on. A comparison process is not essentially different from the comparison process in the foregoing rounds, and therefore details are not described herein again.

It should be noted that a later round of comparison needs more compute resources and does not necessarily achieve a higher gain. Therefore, during communication, a quantity of rounds of needed comparison may be determined according to a requirement. A condition for terminating the foregoing cyclic rounds may be set according to an actual requirement, and is not limited herein. In an optional implementation, the transmitting side may set a maximum quantity of pieces of information omitted from the first set, and terminate a loop when a quantity of 2-tuples in the second set is greater than or equal to the maximum quantity of pieces of information omitted from the first set.

In this implementation, the maximum quantity of pieces of information omitted from the first set is referred to as a first value for short, and first information includes information indicating the first value. The first information may be determined by the transmitting side and indicated to the receiving side, or may be determined by the receiving side and indicated to the transmitting side. If the transmitting side makes a decision or performance of the transmitting side is used as a reference object, the transmitting side may obtain a channel condition, and a device capability and a time threshold of the transmitting side or the receiving side, calculate the first value E, and indicate E to the receiving side. If the receiving side makes a decision or performance of the receiving side is used as a reference object, the receiving side may calculate the first value E based on a device capability and a time threshold of the receiving side or the transmitting side and a channel condition, and then indicate the first value E to the transmitting side.

Optionally, the first value may be calculated based on a device capability, a time threshold, or a channel condition.

The first value may be calculated by the transmitting side based on a device capability or a time threshold of the transmitting side or a channel condition, or may be calculated by the receiving side and then transmitted to the transmitting side. During actual application, whether calculation is specifically performed by the transmitting side or the receiving side needs to be determined according to an actual requirement. If a decision or performance of the transmitting side is mainly used as a reference, the first value may be directly calculated by the transmitting side; otherwise, the first value is calculated by the receiving side.

The transmitting side performs the foregoing calculation process to skip transmitting a part of information in the triple, to reduce a communication delay. However, the foregoing calculation process also causes an increase in transmission time and energy. To achieve better effect and reduce total system energy consumption during communication, communication and compute resources need to be jointly scheduled, to properly allocate the communication and compute resources. The following describes a specific process of proper allocation.

A total delay of a transmission process usually includes two parts: a communication delay $t_1$ and a calculation delay $t_2$. Assuming that a delay for transmitting data information is limited to T, a total process needs to meet a delay limitation: $t_1 + t_2 \leq T$.

The communication delay $t_1$ is calculated by using the following method. It is assumed that, in a communication process, channel path loss between a transmitter and a receiver is h, noise power is $\sigma^2$, transmission bandwidth is B, and transmit power of a base station is p. In this case, a channel capacity between the base station and a user may be written as follows:

$$c = B \log_2\left(1 + \frac{ph}{\sigma^2}\right)$$

Assuming that all of a first head entity, a relation, and a first tail entity in a triple are represented by using a same quantity R of bits, a total quantity of bits of data semantic information D may be written as follows:

$$\text{size}(D) = R(3M - E)$$

M is a total quantity of triples in D, and E is a quantity of triples from which relations are omitted. Therefore, the communication delay may be written as follows:

$$t_1 = \frac{\text{size}(D)}{c} = \frac{R(3M - E)}{B \log_2\left(1 + \frac{ph}{\sigma^2}\right)}$$

The calculation delay $t_2$ is calculated by using the following method.

It can be understood that the calculation delay $t_2$ mainly results from a process of performing a comparison operation between the first set and the second set. For ease of description, in this embodiment, only the comparison processes of the first round and the second round are used for description. Compute resources needed for omitting E relations from specific data cannot be obtained in advance. Therefore, in this embodiment, a ratio of a quantity of triples from which omission may be newly performed in each round of comparison to a total quantity of remaining triples is obtained by using a statistical method, and compute resources needed for omitting E relations in a statistical sense are correspondingly calculated.

A ratio of a quantity of triples from which omission may be newly performed in each round of comparison to a total quantity of triples that exist before this round of comparison is written as follows:

$$Q = \{q_1, q_2, \ldots, q_n, \ldots, q_N\}$$

$q_1$ is a ratio of a quantity of triples from which omission may be newly performed in the first round of comparison to a total quantity of all triples. $q_2$ is a ratio of a quantity of triples from which omission may be newly performed in a first sub-round of comparison in the second round to a total quantity of triples that exist before this round of comparison. $q_n$ is a ratio of a quantity of triples from which omission may be newly performed in an (n - 1)*th* sub-round of comparison in the second round to a total quantity of triples that exist before this round of comparison. N is a total quantity of rounds of statistics.

A quantity of semantic relations that may be omitted in each round of comparison is written into a recursive formula:

$$\begin{cases} E_1 = M \cdot q_1 \\ E_2 = (M - E_1)q_2 \\ E_3 = (M - E_1 - E_2)q_3 \\ \vdots \\ E_N = (M - E_1 - E_2 - \ldots - E_{N-1})q_N \end{cases}$$

M is a total quantity of triples, and $E_N$ is a quantity of new triples from which relations may be omitted in an Nth round of comparison. Based on the foregoing formula, a quantity of times of calculation needed for omitting E relations from M triples may be written as follows:

$$c(E) = \begin{cases} \dfrac{E}{q_1}, 0 \le E \le E_1 \\[2ex] \dfrac{E_1}{q_1} + \dfrac{(E - E_1)E_1}{q_2}, E_1 < E \le E_1 + E_2 \\[2ex] \dfrac{E_1}{q_1} + \left(\dfrac{E_1}{q_1} - E_1\right)E_1 + \dfrac{(E - E_2 - E_1)E_2}{q_3}, E_1 + E_2 < E \le E_1 + E_2 + E_3 \\[2ex] \vdots \\[1ex] \dfrac{E_1}{q_1} + \left(\dfrac{E_1}{q_1} - E_1\right)E_1 + \left(\dfrac{E_1}{q_1} - E_1 - E_2\right)E_2 + \ldots \\[2ex] \ldots + \dfrac{(E - E_{N-1} - \ldots - E_1)E_{N-1}}{q_N}, \displaystyle\sum_{n=1}^{N-1} E_n < E \le \sum_{n=1}^{N} E_n \, , \end{cases}$$

It can be learned from observation that c(E) is an increasing piecewise function, and each piece is a linear function with respect to E.

Therefore, the calculation delay may be written as follows:

$$t_2 = \frac{\tau_1 c(E)}{f}$$

$\tau_1$ is a constant coefficient, and f is a frequency of a central processing unit (central processing unit, CPU). A value of $\tau_1$ is related to time of one round of comparison.

Further, energy consumed by communication may be written as follows:

$$e_1 = t_1 \cdot p$$

$t_1$ is communication time, and p is the transmit power of the base station.

Energy consumed by calculation may be written as follows:

$$e_2 = \tau_1 \tau_2 c(E) f^2$$

$\tau_1$ and $\tau_2$ are constant coefficients, and f is the frequency of the CPU.

In this way, the following joint optimization problem is constructed:

$$\min_{p,E} \qquad e_1 + e_2,$$

$$\text{s.t.} \qquad \frac{R(3M - E)}{B \log_2\left(1 + \frac{ph}{\sigma^2}\right)} + \frac{\tau_1 c(E)}{f} \le T, \qquad (1)$$

$$0 \leq p \leq p_{max}, \qquad\qquad (2)$$

$$0 \leq E \leq M, E \in \mathbb{N}. \qquad\qquad (3)$$

The constraint (1) limits a total communication and calculation delay. The constraint (2) limits the transmit power p of the base station to be a non-negative number without exceeding $p_{max}$. The constraint (3) limits a total quantity E of triples from which semantic relations are omitted to be a natural number without exceeding the total quantity M of triples. An objective of the optimization problem is to minimize the total system energy consumption.

Parameters to be optimized in the optimization problem are the transmit power p of the base station and the total quantity of triples E from which the semantic relations are omitted. When the transmit power p of the base station increases, the communication delay is reduced, but the energy consumed by the communication is not necessarily reduced. When the total quantity E of triples from which the semantic relations are omitted increases, the communication delay is reduced but the calculation delay increases, and the energy consumed by the communication is reduced but the energy consumed by the calculation increases. Therefore, values of the transmit power p of the base station and the total quantity E of triples from which the semantic relations are omitted need to be carefully selected, to minimize the total system energy consumption while meeting all the constraints.

First, it is assumed that the total quantity E of triples from which the semantic relations are omitted is fixed, to analyze overall impact of the transmit power p of the base station. The constraint (1) is simplified, and the transmit power p of the base station is separated to obtain the following:

$$p \geq \left( 2^{\frac{R(3M-E)}{B\left(T - \frac{\tau_1 c(E)}{f}\right)}} - 1 \right) \cdot \frac{h}{\sigma^2}$$

Through observation of a right part of the formula, it is easily learned that, when $T - \frac{\tau_1 c(E)}{f} > 0$, namely,

$$c(E) < \frac{T \cdot f}{\tau_1}$$

the right part of the formula is as follows:

$$\left( 2^{\frac{R(3M-E)}{B\left(T - \frac{\tau_1 c(E)}{f}\right)}} - 1 \right) \cdot \frac{h}{\sigma^2} > 0$$

when

$$\left( 2^{\frac{R(3M-E)}{B\left(T - \frac{\tau_1 c(E)}{f}\right)}} - 1 \right) \cdot \frac{h}{\sigma^2} \leq p_{max}$$

the constraint (1) and the constraint (2) may be combined to obtain the following:

$$\left( 2^{\frac{R(3M-E)}{B\left(T - \frac{\tau_1 c(E)}{f}\right)}} - 1 \right) \cdot \frac{h}{\sigma^2} \leq p \leq p_{max}$$

An objective function of the optimization problem is expanded to obtain the following:

$$F(p, E) = e_1 + e_2 = \frac{R(3M - E)p}{B \log_2 \left(1 + \frac{ph}{\sigma^2}\right)} + \tau_1 \tau_2 c(E) f^2$$

When E is fixed, the objective function becomes a single-variable function with respect to p. In this case, the objective function is denoted as f(p), and monotonicity of the objective function in definition domain is analyzed.

When E is fixed, a second term $\tau_1 \tau_2 c(E) f^2$ of f(p) is a constant. Therefore, only monotonicity of a first term of f(p) needs to be analyzed. The first term of f(p) is multiplied by a constant $\frac{h \cdot B}{\sigma^2 \cdot R(3M - E)}$, and a multiplication result is denoted as g(p). The following is obtained:

$$g(p) = \frac{\frac{ph}{\sigma^2}}{\log_2 \left(1 + \frac{ph}{\sigma^2}\right)}$$

It is easily learned that monotonicity of g(p) is the same as monotonicity of f(p). $\frac{ph}{\sigma^2}$ is denoted as x, and a new function h(x) is written as follows:

$$h(x) = \frac{x}{\log_2(1 + x)}$$

It is easily learned that monotonicity of the function f(p) on p > 0 is the same as monotonicity of the function h(x) on x > 0.

When E is fixed, the objective function is as follows:

$$f(p) = \frac{R(3M - E)p}{B \log_2 \left(1 + \frac{ph}{\sigma^2}\right)} + \tau_1 \tau_2 c(E) f^2$$

The objective function monotonically increases on p > 0. When the total quantity E of triples from which the semantic relations are omitted is fixed, a smaller value of the transmit power p of the base station is better. When the constraints are met, transmit power of the base station that makes the objective function output minimum total system energy consumption is as follows:

$$p_{optimized} = \left(2^{\frac{R(3M-E)}{B\left(T - \frac{\tau_1 c(E)}{f}\right)}} - 1\right) \cdot \frac{h}{\sigma^2}$$

Failing to meet the constraint (1) indicates that a value of E is excessively large, and the calculation delay alone exceeds a limitation of the total delay. In this case, the value of E cannot be used. In addition, because c(E) is a monotonically increasing function, all values greater than the value of E cannot be used, and only a smaller value of E can be selected.

Meeting the delay constraint (1) but failing to meet the power constraint (2) indicates that maximum transmit power of the base station is a limitation. In this case, $p_{optimized} = p_{max}$.

Therefore, for each fixed value of E, a value, corresponding to a case that minimum total system energy consumption is output, of the transmit power p of the base station can be given. Because the total quantity E of triples from which the semantic relations are omitted is a natural number and has an upper bound, an algorithm may be designed based on traversal of E. A specific process of the algorithm is as follows:

(1) Initialize parameters: $p_{optimized}$ is $p_{max}$, $E_{optimized}$ is 0, and a minimum value $obj_{min}$ of the objective function is an infinitely or sufficiently large number.
(2) Make E traverse 0 to M:

(2.1) Determine whether $c(E) < \frac{T \cdot f}{\tau_1}$ is met. If $c(E) < \frac{T \cdot f}{\tau_1}$ is not met, skip remaining steps and select a next value of E.

(2.2) If $c(E) < \frac{T \cdot f}{\tau_1}$ is met, determine whether $\left(2^{\frac{R(3M-E)}{B\left(T - \frac{\tau_1 c(E)}{f}\right)}} - 1\right) \cdot \frac{h}{\sigma^2} \le p_{max}$ is met.

(2.2.1) If $\left(2^{\frac{R(3M-E)}{B\left(T - \frac{\tau_1 c(E)}{f}\right)}} - 1\right) \cdot \frac{h}{\sigma^2} \le p_{max}$ is met, when the total quantity E of triples from which the semantic relations are omitted is fixed, a smaller value of the transmit power p of the base station is better. Correspondingly, transmit power of the base station that makes the objective function output minimum total system energy consumption is as follows:

$$p_{optimized} = \left(2^{\frac{R(3M-E)}{B\left(T - \frac{\tau_1 c(E)}{f}\right)}} - 1\right) \cdot \frac{h}{\sigma^2}$$

(2.2.2) If $\left(2^{\frac{R(3M-E)}{B\left(T - \frac{\tau_1 c(E)}{f}\right)}} - 1\right) \cdot \frac{h}{\sigma^2} \le p_{max}$ is not met, make p be $p_{max}$.

Perform the following calculation: $obj = F(p, E) = e_1 + e_2 = \frac{R(3M-E)p}{B \log_2\left(1 + \frac{ph}{\sigma^2}\right)} + \tau_1 \tau_2 c(E) f^2$ .

(2.3) Determine whether *obj* is less than a minimum value *obj*$_{min}$ of the objective function in a previous round. If *obj* is less than the minimum value *obj*$_{min}$ of the objective function in the previous round, update the minimum value *obj*$_{min}$ of the objective function to the calculated obj, and make $p_{optimized}$ be p and $E_{optimized}$ be E.

The time threshold mentioned in this embodiment may be understood as T. The channel condition is channel information transmitted between the transmitting side and the receiving side. The device capability is a calculation capability and a transmission capability of the transmitting side or the receiving side. A device calculation capability may be understood as $\frac{\tau_1}{f}$ .

Optionally, the transmitting side may determine second information, where the second information indicates the transmitting side to send the third set by using transmit power.

Optionally, the transmitting side may alternatively receive second information from the receiving side.

The second information may include the transmit power, or identifier or index information indicating the transmit power. If the transmitting side makes a decision or performance of the transmitting side is used as a reference object, the transmitting side may obtain a channel condition, and a device capability and a time threshold of the transmitting side or the receiving side, and calculate the first value E and the transmit power p. E needs to be indicated to the receiving side. If the receiving side makes a decision or performance of the receiving side is used as a reference object, the receiving side may calculate the first value E and the transmit power p based on a device capability and a time threshold of the receiving side or the transmitting side and a channel condition, and then send or indicate the first value E and the transmit power p to the transmitting side.

It can be understood that, for an optimization problem of minimizing total energy consumption of a communication system, in this embodiment, resource allocation for communication and calculation is jointly optimized, to effectively reduce overheads of total system energy when a limitation on a total communication and calculation delay remains unchanged.

Step 305: The transmitting side sends the third set to the receiving side.

In this embodiment, after determining the third set from which the first relation is omitted, the transmitting side sends the third set to the receiving side. Because the third set includes 2-tuples in which a part of first relations are omitted, in comparison with directly sending a set that includes all triple information of the to-be-transmitted data, an amount of transmitted data is further reduced.

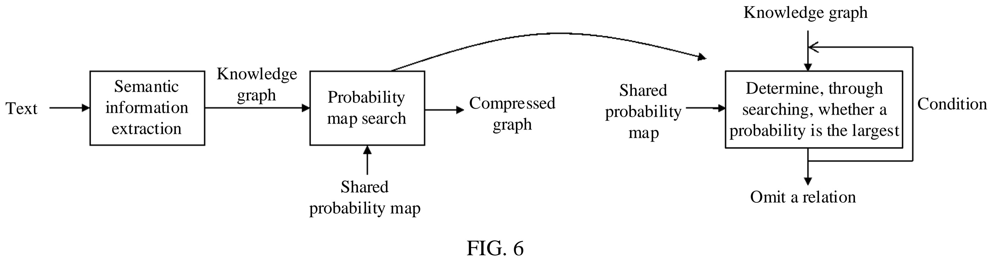

For example, FIG. 6 is a schematic flowchart of performing semantic information processing by a transmitting side according to an embodiment of this application. As shown in FIG. 6, text data is used as an example. The transmitting side extracts semantic information from received text data to obtain a knowledge graph; search the knowledge graph for a probability map based on a shared probability map, in other words, find a matching quadruple; omit, by using a maximum value of a probability corresponding to a second relation as a condition, a first relation corresponding to the maximum value; and finally output a compressed knowledge graph.

Step 306: The receiving side receives the third set from the transmitting side.

Step 307: The receiving side obtains the second set, where the second set includes the probability corresponding to the second relation.

In this embodiment, the second set is a quadruple shared between the receiving side and the transmitting side, and is mainly in a form of (a second head entity, a second relation, a probability corresponding to the second relation, a second tail entity). The second set may be constructed by the receiving side, or may be constructed by the transmitting side. Correspondingly, there are the following two implementations.

In an implementation, the receiving side receives a second set sent by the transmitting side.

In another implementation, the receiving side constructs a second set, and sends the second set to the transmitting side.

Optionally, the second set may be constructed based on sample data.

Before performing step 308, in an optional implementation, the receiving side may further obtain first information, where the first information includes a device capability, a time threshold, or a channel condition; then the receiving side obtains a first value based on the first information, where the first value includes a maximum quantity of pieces of information omitted from the first set; and finally, the receiving side sends the first value to the transmitting side.

In this implementation, the first information mainly includes transmit power and the first value. The receiving side may obtain the maximum quantity of pieces of omitted information based on the first value.

Optionally, the first information obtained by the receiving side may be received from the transmitting side, or may be obtained by the receiving side through calculation based on the device capability, the time threshold, or the channel condition.

Step 308: The receiving side determines the first set based on the probability corresponding to the second relation.

In this embodiment, after receiving the third set, the receiving side may restore, based on the probability corresponding to the second relation in the second set, the omitted first relation from the third set by using a method the same as that used by the transmitting side, to restore the first set.

In a possible implementation, that the receiving side determines the first set based on the probability corresponding to the second relation includes:

For at least one 2-tuple in the third set, the receiving side obtains, based on the probability of the second relation, a first relation omitted from each of the at least one 2-tuple, to obtain at least one triple; and

the receiving side obtains the first set based on all triples in the third set and the at least one triple.

In a possible implementation, that the receiving side obtains, based on the probability of the second relation, the first relation omitted from each of the at least one 2-tuple, to obtain the at least one triple includes:

For each of the at least one 2-tuple, the receiving side selects a quadruple matching the 2-tuple from the second set, and when a probability corresponding to a second relation in the quadruple meets a first condition, the receiving side adds the second relation in the quadruple to the 2-tuple to obtain a triple.

In a possible implementation, a condition for selecting, by the receiving side, the quadruple matching the 2-tuple from the second set includes:

A first head entity in the 2-tuple is the same as a second head entity in the quadruple, and a first tail entity in the 2-tuple is the same as a second tail entity in the quadruple.

In a possible implementation, the first condition includes:

The probability corresponding to the second relation in the quadruple is a largest one of all probabilities, where all the probabilities are probabilities corresponding to all second relations between the second head entity and the second tail entity in the quadruple.

After a restored triple is obtained based on the foregoing method, a second round of conditional probability search may be performed by using a 2-tuple that is in the third set and that has been restored to a triple as a condition. Similar to the operation of the transmitting side, a conditional probability of any unrestored 2-tuple under a condition that a 2-tuple that has been restored to a triple exists is calculated by using any 2-tuple that has been restored to a triple as a condition. Then, when a conditional probability of a first unrestored 2-tuple is a largest one of all conditional probabilities corresponding to all unrestored 2-tuples under the same condition, a first relation in the first unrestored 2-tuple is restored to obtain a restored triple. After all unrestored 2-tuples in the third set are traversed to obtain all restored triples that meet the foregoing requirement, the first set is obtained based on all restored 2-tuples, at least one triple restored in a first round, and a triple that originally exists in the third set.

For a specific operation, refer to the specific content of calculating, by the transmitting side, the conditional probability in the second round. Details are not described herein again.

Optionally, the transmitting side and the receiving side may separately omit and restore the first relation based on an identifier.

The transmitting side may identify a triple that is selected in each round and from which the first relation may be omitted, that is, a 2-tuple in the third set. After receiving the third set, the receiving side may restore, based on the identifier, the 2-tuple obtained in each round. For example, the receiving side first determines, based on the identifier, a 2-tuple from which the transmitting side performs omission in the first round, and then restores the 2-tuple to a triple based on the first condition. Then the receiving side calculates, by using a 2-tuple that is in the third set and that has been restored to a triple as a condition, a conditional probability of a 2-tuple, from which the transmitting side performs omission in the second round, under a condition that a 2-tuple that has been restored to a triple exists, to restore a 2-tuple from which the first relation is omitted in the second round to a triple.

It can be understood that, with an increase in a quantity of rounds, a quantity of 2-tuples used as a condition correspondingly increases. For example, two 2-tuples are used as a condition for calculating a conditional probability in a third round, three 2-tuples are used as a condition for calculating a conditional probability in a fourth round, and so on. A comparison process is not essentially different from the comparison process in the foregoing rounds, and therefore details are not described herein again.

It should be noted that the receiving side shares the same second set (the probability map) with the transmitting side, so that after the transmitting side compresses semantic information, the receiving side can perform restoration from compressed semantic information based on a same method, to obtain the complete first set. This reduces an amount of transmitted data and ensures complete data transmission.

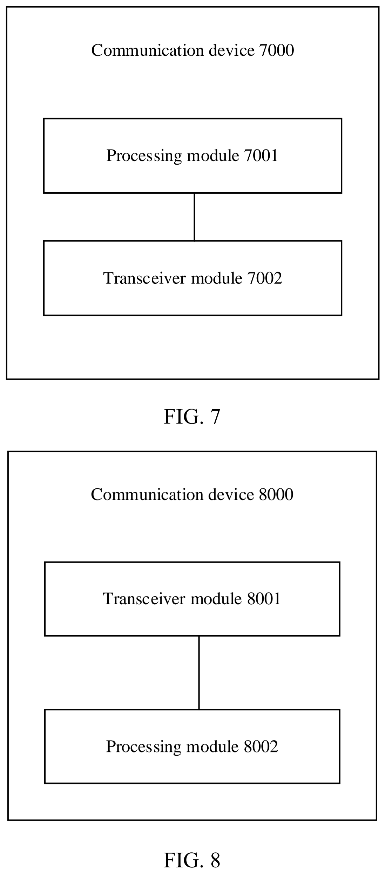

Based on the embodiments corresponding to FIG. 1a to FIG. 6, to better implement the foregoing solutions in embodiments of this application, the following further provides related devices for implementing the foregoing solutions. FIG. 7 is a diagram of a structure of a communication device according to an embodiment of this application.

The communication device 7000 may be one of the terminal devices 120a to 120j shown in FIG. 1a, or may be a component (for example, a processor, a chip, or a chip system) of the terminal device, or may be the network device 110a or 110b shown in FIG. 1a, or may be a component (for example, a processor, a chip, or a chip system) of the network device. The communication apparatus 7000 may be configured to perform the processes performed by the transmitting side in the embodiments shown in FIG. 3 to FIG. 6. The communication device 7000 includes:

a processing module 7001, configured to obtain a first set, where the first set includes at least one triple corresponding to to-be-transmitted data, and each triple includes a first head entity, a first tail entity, and a first relation between the first head entity and the first tail entity, where

the processing module 7001 is further configured to determine a third set based on a probability corresponding to a second relation in a second set, where the second set includes at least one quadruple, each quadruple includes a second head entity, a second tail entity, a second relation between the second head entity and the second tail entity, and a probability corresponding to the second relation, the third set includes at least one 2-tuple, and the 2-tuple includes the first head entity and the first tail entity; and

a transceiver module 7002, configured to send the third set to a receiving side, where the third set is used for the receiving side to determine the first set.

In a possible implementation, the processing module 7001 is further configured to:
receive the second set from the receiving side.

In a possible implementation, the transceiver module 7002 is further configured to:
send the second set to the receiving side.

In a possible implementation, the processing module 7001 is further configured to determine first information, where the first information indicates a maximum quantity of pieces of information omitted from the first set; and
the transceiver module 7002 is further configured to send the first information to the receiving side.

In a possible implementation, the transceiver module 7002 is further configured to:
receive first information from the receiving side, where the first information indicates a maximum quantity of pieces of information omitted from the first set.

In a possible implementation, the processing module 7001 is further configured to:

for the at least one triple, select, from the at least one triple based on the probability corresponding to the second relation, all triples from which the first relation is omitted;

obtain, based on the first set and all triples that are in the first set and from which the first relation is omitted, all triples from which the first relation is not omitted; and

obtain the third set based on all the triples from which the first relation is omitted and all the triples from which the first relation is not omitted.

In a possible implementation, the processing module 7001 is further configured to:

for the at least one triple, select, from the at least one triple based on the probability corresponding to the second relation, all triples from which the first relation is omitted;

for each triple, if a quadruple matching the triple is selected from the second set, when a probability corresponding to a second relation in the quadruple meets a first condition, omit a first relation in the triple to obtain a triple from which the first relation is omitted; and

obtain the third set based on all the triples from which the first relation is omitted and all the triples from which the first relation is not omitted.

In a possible implementation, the processing module 7001 is further configured to:

for the at least one triple, select, from the at least one triple based on the probability corresponding to the second relation, all triples from which the first relation is omitted;

for each triple, if a first head entity in the triple is the same as a second head entity in a quadruple, a first tail entity in the triple is the same as a second tail entity in the quadruple, and a first relation in the triple is the same as a second relation in the quadruple, when a probability corresponding to the second relation in the quadruple meets a first condition, omit the first relation in the triple to obtain a triple from which the first relation is omitted; and

obtain the third set based on all the triples from which the first relation is omitted and all the triples from which the first relation is not omitted.

In a possible implementation, the processing module 7001 is further configured to:

for the at least one triple, select, from the at least one triple based on the probability corresponding to the second relation, all triples from which the first relation is omitted;

for each triple, if a first head entity in the triple is the same as a second head entity in a quadruple, a first tail entity in the triple is the same as a second tail entity in the quadruple, and a first relation in the triple is the same as a second relation in the quadruple, when a probability corresponding to the second relation in the quadruple is a largest one of all probabilities, omit the first relation in the triple to obtain a triple from which the first relation is omitted, where all the probabilities are probabilities corresponding to all second relations between the second head entity and the second tail entity in the quadruple; and

obtain the third set based on all the triples from which the first relation is omitted and all the triples from which the first relation is not omitted.

In a possible implementation, the processing module 7001 is further configured to:

for the at least one triple, select, from the at least one triple based on the probability corresponding to the second relation, all triples from which the first relation is omitted;

obtain, based on the first set and all triples that are in the first set and from which the first relation is omitted, all triples from which the first relation is not omitted;

obtain a fourth set and a fifth set, where the fourth set includes all the triples that are in the first set and from which the first relation is omitted, and the fifth set includes a triple in the first set other than the fourth set;

for several triples in the fifth set, select, from the several triples by using the fourth set as a condition, a triple from which the first relation is omitted and a triple from which the first relation is not omitted, to update the fourth set and the fifth set; and

obtain the third set based on an updated fourth set and an updated fifth set.

In a possible implementation, the processing module 7001 is further configured to:

for the at least one triple, select, from the at least one triple based on the probability corresponding to the second relation, all triples from which the first relation is omitted;

obtain, based on the first set and all triples that are in the first set and from which the first relation is omitted, all triples from which the first relation is not omitted;

obtain a fourth set and a fifth set, where the fourth set includes all the triples that are in the first set and from which the first relation is omitted, and the fifth set includes a triple in the first set other than the fourth set;

for several triples in the fifth set, calculate, for each of the several triples when the triple matches any quadruple in the second set, a conditional probability corresponding to the quadruple under a condition that any n triples in the fourth set exist, where n is a positive integer, and an initial value of n is 1;

when the conditional probability meets a second condition, omit a first relation in the triple to obtain an updated fourth set and an updated fifth set;

when a third condition is met, add 1 to n, and return to the step of calculating, for each of the several triples when the triple matches any quadruple in the second set, a conditional probability corresponding to the quadruple under a condition that any n triples in the fourth set exist; and

obtain the third set based on the updated fourth set and the updated fifth set.

In a possible implementation, the second condition includes:

The conditional probability corresponding to the quadruple is a largest one of all probabilities, where all the probabilities are conditional probabilities corresponding to all second relations between a second head entity and a second tail entity in the quadruple.

In this implementation, that a conditional probability corresponding to a first relation is a largest one of all conditional probabilities is used as a condition for omission, so that the receiving side can restore the first relation with the largest probability from the same second set based on the condition. This facilitates restoration of data.

In a possible implementation, the third condition includes at least one of the following:

n is less than a first value; and
a quantity of triples in the fourth set is less than a second value.

In a possible implementation, the processing module 7001 is further configured to:

for the at least one triple, select, from the at least one triple based on the probability corresponding to the second relation, all triples from which the first relation is omitted;

obtain, based on the first set and all triples that are in the first set and from which the first relation is omitted, all triples from which the first relation is not omitted;

when a quantity of all first relations omitted from the first set is less than a second value, continue to perform a subsequent operation, where the second value is the maximum quantity of pieces of information omitted from the first set, and the second value is obtained based on a device capability, a time threshold, or a channel condition;

obtain a fourth set and a fifth set, where the fourth set includes all the triples that are in the first set and from which the first relation is omitted, and the fifth set includes a triple in the first set other than the fourth set; and

for several triples in the fifth set, select, from the several triples by using the fourth set as a condition, a triple from which the first relation is omitted and a triple from which the first relation is not omitted, to update the fourth set and the fifth set; and

obtain the third set based on an updated fourth set and an updated fifth set.

In a possible implementation, the processing module 7001 is further configured to:

determine second information, where the second information indicates to send the third set by using transmit power.

In a possible implementation, the transceiver module 7002 is further configured to:

receive second information from the receiving side, where the second information indicates to send the third set by using transmit power.

In this embodiment, the operations performed by the units in the communication device 7000 are similar to those described in the method embodiments shown in FIG. 3 to FIG. 6, may be used to implement the functions of the transmitting side in the foregoing method embodiments, and can also achieve the beneficial effects of the foregoing method embodiments. Details are not described herein again.

FIG. 8 is a diagram of another structure of a communication device according to an embodiment of this application.

The communication device 8000 may be one of the terminal devices 120a to 120j shown in FIG. 1a, or may be a component (for example, a processor, a chip, or a chip system) of the terminal device, or may be the network device 110a or 110b shown in FIG. 1a, or may be a component (for example, a processor, a chip, or a chip system) of the network device. The communication apparatus 8000 may be configured to perform the processes performed by the receiving side in the embodiments shown in FIG. 3 to FIG. 6. The communication device 8000 includes:

a transceiver module 8001, configured to receive a third set from a transmitting side, where the third set includes at least one 2-tuple, and the 2-tuple includes a first head entity and a first tail entity; and

a processing module 8002, configured to determine a first set based on a probability corresponding to a second relation in a second set, where the second set includes at least one quadruple, and each quadruple includes a second head entity, a second tail entity, a second relation between the second head entity and the second tail entity, and a probability corresponding to the second relation.

In a possible implementation, the processing module 8002 is further configured to:

receive the second set from the transmitting side.

In a possible implementation, the transceiver module 8001 is further configured to:

send the second set to the transmitting side.

In a possible implementation, the processing module 8002 is further configured to determine first information, where the first information indicates a maximum quantity of pieces of information omitted from the first set; and

the transceiver module 8001 is further configured to send the first information to the receiving side.

In a possible implementation, the transceiver module 8001 is further configured to:

receive first information from a receiving side, where the first information indicates a maximum quantity of pieces of information omitted from the first set.

In a possible implementation, the processing module 8002 is further configured to:

obtain first information, where the first information includes a device capability, a time threshold, or a channel condition;

obtain a first value based on the first information, where the first value includes a maximum quantity of pieces of information omitted from the first set; and

send the first value.

In a possible implementation, the processing module 8002 is further configured to:

receive first information from the transmitting side.

In a possible implementation, determining the first set based on the probability corresponding to the second relation includes:

for the at least one 2-tuple in the third set, obtaining, based on the probability of the second relation, a first relation omitted from each of the at least one 2-tuple, to obtain the at least one triple; and

obtaining the first set based on all triples in the third set and the at least one triple.

In a possible implementation, the processing module 8002 is further configured to:

for each of the at least one 2-tuple, if a quadruple matching the 2-tuple is selected from the second set, when a probability corresponding to a second relation in the quadruple meets a first condition, add the second relation in the quadruple to the 2-tuple to obtain a triple.

In a possible implementation, a condition for selecting the quadruple matching the 2-tuple from the second set includes:

A first head entity in the 2-tuple is the same as a second head entity in the quadruple, and a first tail entity in the 2-tuple is the same as a second tail entity in the quadruple.

In a possible implementation, the first condition includes:

The probability corresponding to the second relation in the quadruple is a largest one of all probabilities, where all the probabilities are probabilities corresponding to all second relations between the second head entity and the second tail entity in the quadruple.

In this embodiment, the operations performed by the units in the communication device 8000 are similar to those described in the method embodiments shown in FIG. 3 to FIG. 6, may be used to implement the functions of the compute device in the foregoing method embodiments, and can also achieve the beneficial effects of the foregoing method embodiments. Details are not described herein again.

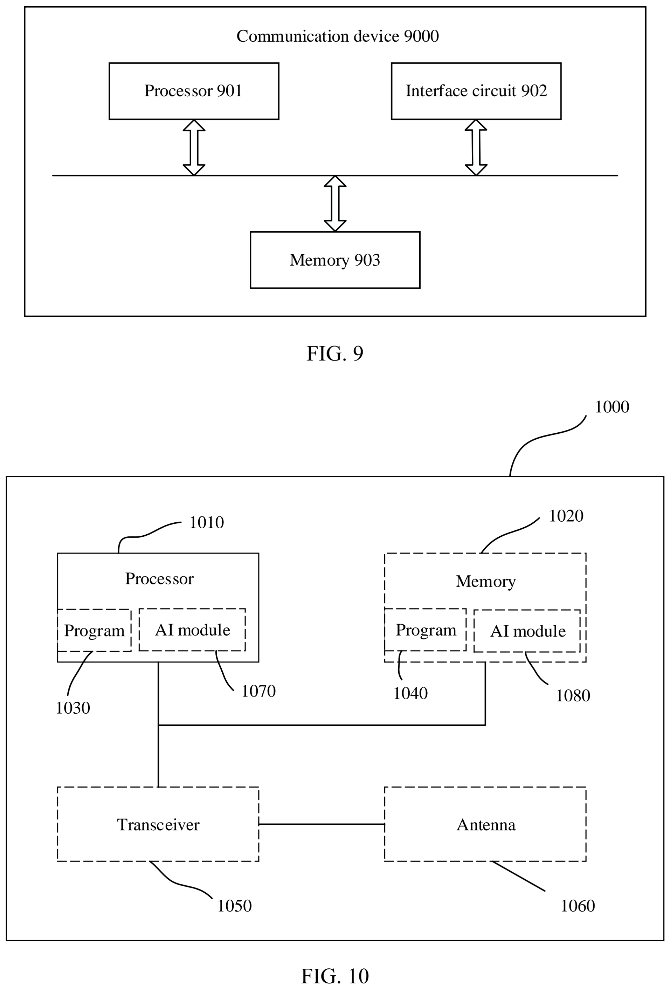

FIG. 9 is a diagram of another structure of a communication device according to an embodiment of this application. The communication device 9000 may be a network device, or may be a terminal device, or may be a chip, a chip system, a processor, or the like that supports a terminal device or a network device in implementing the foregoing methods. The apparatus may be configured to implement the methods shown in FIG. 3 to FIG. 6 in embodiments of this application. For details, refer to the descriptions in the foregoing method embodiments.

The communication device 9000 includes one or more processors 901 and an interface circuit 902. The processor 901 is coupled to the interface circuit 902. It can be understood that the interface circuit 902 may be a transceiver or an input/output interface.

Optionally, the communication device 9000 may include one or more memories 903, configured to store instructions to be executed by the processor 901, or store input data needed by the processor 901 to run instructions, or store data generated after the processor 901 runs instructions. The memory 903 may be disposed in the communication device 9000, or may be disposed outside the communication device 9000.

In another optional design, the processor 901 may include a transceiver unit for implementing a receiving function and a sending function. For example, the transceiver unit may be a transceiver circuit, an interface, or an interface circuit. The transceiver circuit, the interface, or the interface circuit for implementing the receiving function and the sending function may be separated, or may be integrated together. The transceiver circuit, the interface, or the interface circuit may be configured to read and write code or data. Alternatively, the transceiver circuit, the interface, or the interface circuit may be configured to transmit or transfer a signal.

In still another possible design, the communication device 9000 may include a circuit. The circuit may implement a sending, receiving, or communication function in the foregoing method embodiments.

When the communication device 9000 is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication device 9000 is a module used in a network device, the network device module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It can be understood that the processor 901 in this embodiment of this application may be a central processing unit (Central Processing Unit, CPU), or may be another general-purpose processor, a digital signal processor (Digital Signal Processor, DSP), an application-specific integrated circuit (Application-specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, the storage medium is coupled to the processor, so that the processor can read information from the storage medium and write information to the storage medium. The storage medium may alternatively be a component of the processor. The processor and the storage medium may be located in an ASIC. In addition, the ASIC may be located in a network device or a terminal device. Alternatively, the processor and the storage medium may exist in a network device or a terminal device as discrete components.

The apparatus described in the foregoing embodiment may be a network device or a terminal device. However, the scope of the apparatus described in this application is not limited thereto, and a structure of the apparatus may not be limited by FIG. 9. The apparatus may be an independent device, or may be a part of a larger device. For example, the apparatus may be:

(1) an independent integrated circuit (integrated circuit, IC), a chip, or a chip system or subsystem;
(2) a set including one or more ICs, where optionally, the IC set may further include a storage component configured to store data and/or instructions;
(3) an ASIC, for example, a modem (MSM);
(4) a module that can be embedded in another device;
(5) a receiver, a terminal device, an intelligent terminal device, a cellular phone, a wireless device, a handheld device, a mobile unit, a vehicle-mounted device, a network device, a cloud device, an artificial intelligence device, a machine device, a household device, a medical device, an industrial device, or the like; and
(6) others.

FIG. 10 is a diagram of another structure of a communication device according to an embodiment of this application. The communication device 1000 may be a network device, or may be a terminal device, or may be a chip, a chip system, a processor, or the like that supports a terminal device or a network device in implementing the foregoing methods. The apparatus may be configured to implement the methods shown in FIG. 3 to FIG. 6 in embodiments of this application. For details, refer to the descriptions in the foregoing method embodiments.

As shown in FIG. 10, it can be understood that the communication device 1000 includes means in necessary forms, such as a module, a unit, an element, a circuit, or an interface, to be properly configured together to perform the present solutions. The communication device 1000 may be the radio access network (radio access network, RAN) node, the terminal device, the core network device, or another network device in FIG. 1a, or may be a component (for example, a chip) in these devices, to implement the methods described in the following method embodiments. The communication device 1000 includes one or more processors 1010. The processor 1010 may be a general-purpose processor, a dedicated processor, or the like, for example, may be a baseband processor or a central processing unit. The baseband processor may be configured to process a communication protocol and communication data. The central processing unit may be configured to control the communication device (for example, the RAN node, the terminal device, or the chip), execute a software program, and process data of the software program.

Optionally, in a design, the processor 1010 may include a program 1030 (which may also be referred to as code or instructions sometimes). The program 1030 may be run on the processor 1010, to enable the communication device 1000 to perform the methods described in the following embodiments. In another possible design, the communication device 1000 includes a circuit (not shown in FIG. 10), and the circuit is configured to implement the functions shown in FIG. 3 to FIG. 6 in embodiments.

Optionally, the communication device 1000 may include one or more memories 1020, and a program 1040 (which may also be referred to as code or instructions sometimes) is stored in the memory 1020. The program 1040 may be run on the processor 1010, to enable the communication device 1000 to perform the methods described in the method embodiments shown in FIG. 3 to FIG. 6.

Optionally, the processor 1010 and/or the memory 1020 may include an artificial intelligence (Artificial Intelligence, AI) module 1070/1080, and the AI module is configured to implement an AI-related function. The AI module may be implemented by software, hardware, or a combination of software and hardware. For example, the AI module may include a radio access network intelligent controller (radio access network intelligent controller, RIC) module. For example, the AI module may be a near-real-time RIC or a non-real-time RIC.

Optionally, the processor 1010 and/or the memory 1020 may further store data. The processor and the memory may be separately disposed, or may be integrated together.

Optionally, the communication device 1000 may further include a transceiver 1050 and/or an antenna 1060. The processor 1010 may also be referred to as a processing unit sometimes, and controls the communication device (for example, the RAN node or the terminal device). The transceiver 1050 may also be referred to as a transceiver unit, a transceiver device, a transceiver circuit, a transceiver, or the like sometimes, and is configured to implement a transceiver function of the communication device through the antenna 1060.

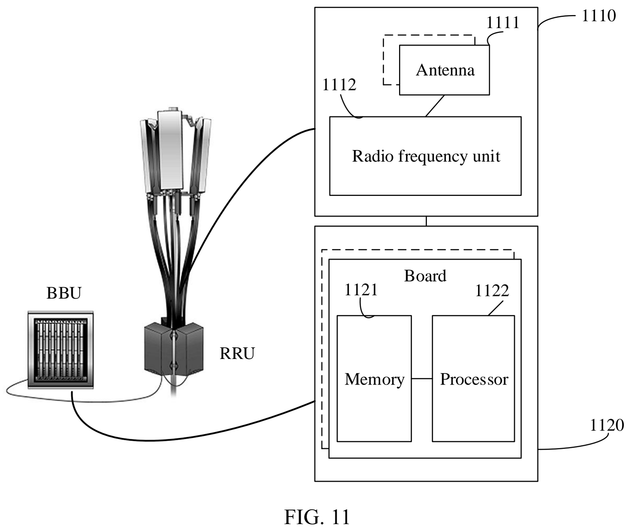

When a communication device in embodiments of this application is a network device, the communication device may be shown in FIG. 11. FIG. 11 is a diagram of another structure of a communication device according to an embodiment of this application. The communication device may include one or more radio frequency units, for example, a remote radio unit (remote radio unit, RRU) 1110 and one or more baseband units (baseband unit, BBU) (which may also be referred to as a digital unit, digital unit, DU) 1120. The RRU 1110 may be referred to as a transceiver module. The transceiver module may include a sending module and a receiving module, or the transceiver module may be a module that can implement a sending function and a receiving function. The transceiver module may correspond to the transceiver module 7002 in FIG. 7. To be specific, the transceiver module may perform an action performed by the transceiver module 7002. Optionally, the transceiver module may also be referred to as a transceiver device, a transceiver circuit, a transceiver, or the like, and may include at least one antenna 1111 and a radio frequency unit 1112. The RRU 1110 is mainly configured to receive and send a radio frequency signal, and perform conversion between a radio frequency signal and a baseband signal. The BBU 1120 is mainly configured to perform baseband processing, control a base station, and the like. The RRU 1110 and the BBU 1120 may be physically disposed together, or may be physically separated, that is, in a distributed base station.

The BBU 1120 is a control center of the base station, may also be referred to as a processing module, and is mainly configured to perform baseband processing functions such as channel coding, multiplexing, modulation, and spectrum spreading. In addition, the processing module may control an action performed by the processing module 7002 in FIG. 7. For example, the BBU (the processing module) may be configured to control the base station to perform an operation process related to the network device in the foregoing method embodiments.

In an example, the BBU 1120 may include one or more boards, and a plurality of boards may jointly support a radio access network (for example, a long term evolution (long term evolution, LTE) network) of a single access standard, or may separately support radio access networks (for example, an LTE network, a 5G network, or another network) of different access standards. The BBU 1120 further includes a memory 1121 and a processor 1122. The memory 1121 is configured to store necessary instructions and data. The processor 1122 is configured to control the base station to perform a necessary action, for example, is configured to control the base station to perform an operation process related to the network device in the foregoing method embodiments. The memory 1121 and the processor 1122 may serve one or more boards. To be specific, a memory and a processor may be disposed on each board, or a plurality of boards may share a same memory and a same processor. In addition, a necessary circuit may be further disposed on each board.

An embodiment of this application further provides a computer-readable medium that stores a computer program. When the computer program is executed by a computer, functions in any one of the foregoing method embodiments are implemented.

An embodiment of this application further provides a computer program product. When the computer program product is executed by a computer, functions in any one of the foregoing method embodiments are implemented.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer instructions are loaded and executed on a computer, all or some of the processes or the functions according to embodiments of this application are produced. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disk (solid-state disk, SSD)), or the like.

It can be understood that the systems, apparatuses, and methods described in this application may alternatively be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely intended for differentiation for ease of description, but not to limit the scope of embodiments of this application. Sequence numbers of the foregoing processes do not mean an execution sequence, and the execution sequence of the processes should be determined based on functions and internal logic of the processes.

**Claims**

1. A semantic communication method, comprising:

   determining a first set, wherein the first set comprises at least one triple, and each triple comprises a first head entity, a first tail entity, and a first relation between the first head entity and the first tail entity;
   determining a third set based on a probability corresponding to a second relation in a second set, wherein the second set comprises at least one quadruple, each quadruple comprises a second head entity, a second tail entity, a second relation between the second head entity and the second tail entity, and a probability corresponding to the second relation, the third set comprises at least one 2-tuple, and the 2-tuple comprises the first head entity and the first tail entity; and
   sending the third set to a receiving side, wherein the third set is used for the receiving side to determine the first set.

2. The method according to claim 1, further comprising:
   receiving the second set.

3. The method according to claim 1, further comprising:
   sending the second set to the receiving side.

4. The method according to any one of claims 1 to 3, further comprising:

   determining first information, wherein the first information indicates a maximum quantity of pieces of information omitted from the first set; and
   sending the first information to the receiving side.

5. The method according to any one of claims 1 to 3, further comprising:
   receiving first information from the receiving side, wherein the first information indicates a maximum quantity of pieces of information omitted from the first set.

6. The method according to any one of claims 1 to 5, wherein determining the third set based on the probability corresponding to the second relation in the second set comprises:

   for the at least one triple, selecting, from the at least one triple based on the probability corresponding to the second relation, all triples from which the first relation is omitted;
   obtaining, based on the first set and all triples that are in the first set and from which the first relation is omitted, all triples from which the first relation is not omitted; and
   obtaining the third set based on all the triples from which the first relation is omitted and all the triples from which the first relation is not omitted.

7. The method according to claim 6, wherein obtaining the third set based on all the triples from which the first relation is omitted and all the triples from which the first relation is not omitted comprises:

   obtaining a fourth set and a fifth set, wherein the fourth set comprises all the triples that are in the first set and from which the first relation is omitted, and the fifth set comprises a triple in the first set other than the fourth set;
   for one or more triples in the fifth set, selecting, from the several triples by using the fourth set as a condition, a triple from which the first relation is omitted and a triple from which the first relation is not omitted, to update the fourth set and the fifth set; and
   obtaining the third set based on an updated fourth set and an updated fifth set.

8. The method according to any one of claims 1 to 7, further comprising:
   determining second information, wherein the second information indicates to send the third set by using transmit power.

9. The method according to any one of claims 1 to 7, further comprising:
   receiving second information from the receiving side, wherein the second information indicates to send the third set by using transmit power.

10. A semantic communication method, comprising:

    receiving a third set from a transmitting side, wherein the third set comprises at least one 2-tuple, and the 2-tuple comprises the first head entity and the first tail entity; and
    determining a first set based on a probability corresponding to a second relation in a second set, wherein the second set comprises at least one quadruple, each quadruple comprises a second head entity, a second tail entity, a second relation between the second head entity and the second tail entity, and a probability corresponding to the second relation, the first set comprises at least one triple, and each triple comprises the first head entity, the first tail entity, and a first relation between the first head entity and the first tail entity.

11. The method according to claim 10, further comprising:
    receiving the second set.

12. The method according to claim 10, further comprising:
    sending the second set to the transmitting side.

13. The method according to any one of claims 10 to 12, further comprising:

    determining first information, wherein the first information indicates a maximum quantity of pieces of information omitted from the first set; and

sending the first information.

14. The method according to any one of claims 10 to 12, further comprising:
receiving first information from the transmitting side, wherein the first information indicates a maximum quantity of pieces of information omitted from the first set.

15. The method according to any one of claims 10 to 14, wherein determining the first set based on the probability corresponding to the second relation in the second set comprises:

for the at least one 2-tuple in the third set, obtaining, based on the probability of the second relation, a first relation omitted from each of the at least one 2-tuple, to obtain the at least one triple; and
obtaining the first set based on all triples in the third set and the at least one triple.

16. A communication device, comprising:

a processing module, configured to determine a first set, wherein the first set comprises at least one triple corresponding to to-be-transmitted data, and each triple comprises a first head entity, a first tail entity, and a first relation between the first head entity and the first tail entity, wherein
the processing module is further configured to determine a third set based on a probability corresponding to a second relation in a second set, wherein the second set comprises at least one quadruple, each quadruple comprises a second head entity, a second tail entity, a second relation between the second head entity and the second tail entity, and a probability corresponding to the second relation, the third set comprises at least one 2-tuple, and the 2-tuple comprises the first head entity and the first tail entity; and
a transceiver module, configured to send the third set to a receiving side, wherein the third set is used for the receiving side to determine the first set.

17. A communication device, comprising:

a transceiver module, configured to receive a third set from a transmitting side, wherein the third set comprises at least one 2-tuple, and the 2-tuple comprises the first head entity and the first tail entity; and
a processing module, configured to determine a first set based on a probability corresponding to a second relation in a second set, wherein the second set comprises at least one quadruple, each quadruple comprises a second head entity, a second tail entity, a second relation between the second head entity and the second tail entity, and a probability corresponding to the second relation, the first set comprises at least one triple, and each triple comprises the first head entity, the first tail entity, and a first relation between the first head entity and the first tail entity.

18. A communication device, comprising a processor and an interface circuit, wherein the interface circuit is configured to receive a signal from another communication device and transmit the signal to the processor, or send a signal from the processor to another communication device, and the processor is configured to implement, through a logic circuit or by executing code instructions, the method according to any one of claims 1 to 9, or implement the method according to any one of claims 10 to 15.

19. A communication system, comprising at least one communication device, wherein the communication device performs the method according to any one of claims 1 to 9, or performs the method according to any one of claims 10 to 15.

20. A computer-readable storage medium, wherein the storage medium stores a computer program or instructions, and when the computer program or the instructions are executed by a communication device, the method according to any one of claims 1 to 9 is implemented, or the method according to any one of claims 10 to 15 is implemented.

21. A communication device, comprising a processor, wherein the processor is configured to execute a computer program or instructions in a memory, to implement the method according to any one of claims 1 to 9, or implement the method according to any one of claims 10 to 15.

FIG. 1a

FIG. 1b

FIG. 1c

FIG. 1d

Text → | Semantic information extraction | — Knowledge graph → | Text information restoration | → Text

## FIG. 1e

| Determine a first set, where the first set includes at least one triple corresponding to to-be-transmitted data, and each triple includes a first head entity, a first tail entity, and a first relation between the first head entity and the first tail entity | S1 |

↓

| Obtain a second set, where the second set includes at least one quadruple, and each quadruple includes a second head entity, a second tail entity, a second relation between the second head entity and the second tail entity, and a probability corresponding to the second relation | S2 |

↓

| Determine a third set based on the probability corresponding to the second relation, where the third set includes at least one 2-tuple, and the 2-tuple includes the first head entity and the first tail entity | S3 |

↓

| Send the third set to a receive end, where the third set is used for the receive end to determine the first set | S4 |

## FIG. 2

| Transmitting side | Receiving side |
|---|---|

Step 301: The transmitting side obtains to-be-transmitted data

Step 302: The transmitting side determines a first set

Step 303: The transmitting side obtains a second set, where the second set includes a probability corresponding to a second relation

Step 304: The transmitting side determines a third set based on the probability corresponding to the second relation

Step 305: The transmitting side sends the third set to the receiving side

Step 306: The receiving side receives the third set from the transmitting side

Step 307: The receiving side obtains the second set, where the second set includes the probability corresponding to the second relation

Step 308: The receiving side determines the first set based on the probability corresponding to the second relation

FIG. 3

| Tree-road | | Tree-vehicle | | Pedestrian-vehicle | | Hat-pedestrian | |
|---|---|---|---|---|---|---|---|
| On an inner side | On an outer side | In front | Behind | On the left | On the right | In hand | On the head |
| 0.3 | 0.7 | 0.5 | 0.5 | 0.4 | 0.6 | 0.2 | 0.8 |

FIG. 4

EP 4 746 508 A1

FIG. 5

FIG. 6

EP 4 746 508 A1

Communication device 7000

Processing module 7001

Transceiver module 7002

FIG. 7

Communication device 8000

Transceiver module 8001

Processing module 8002

FIG. 8

Communication device 9000

Processor 901

Interface circuit 902

Memory 903

FIG. 9

1000

1010

Processor

Program | AI module

1030

1070

1020

Memory

Program | AI module

1040

1080

Transceiver

Antenna

1050

1060

FIG. 10

FIG. 11

## INTERNATIONAL SEARCH REPORT

| International application No. |
| --- |
| **PCT/CN2023/118375** |

| A. | CLASSIFICATION OF SUBJECT MATTER |
| --- | --- |

H04W 28/06(2009.01)i

According to International Patent Classification (IPC) or to both national classification and IPC

| B. | FIELDS SEARCHED |
| --- | --- |

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNKI; CNTXT; ENTXTC; DWPI; IEEE: 语义, 通信, 知识图谱, 三元组, 二元组, 概率, 关系, 映射, 对应, 实体, 省略, 数据量, semantic, communicat+, knowledge graph, triple, tuple, probability, relation, mapping, correspond+, entity, omission, data, volume

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 114817565 A (NATIONAL UNIVERSITY OF DEFENSE TECHNOLOGY OF PLA) 29 July 2022 (2022-07-29)<br>claims 1-10, and description, paragraphs 4-34 | 1-21 |
| A | CN 111241298 A (TENCENT TECHNOLOGY (SHENZHEN) CO., LTD.) 05 June 2020 (2020-06-05)<br>entire document | 1-21 |
| A | CN 112800247 A (HUAZHONG UNIVERSITY OF SCIENCE AND TECHNOLOGY) 14 May 2021 (2021-05-14)<br>entire document | 1-21 |
| A | CN 114461816 A (NANJING UNIVERSITY OF POSTS AND TELECOMMUNICATIONS) 10 May 2022 (2022-05-10)<br>entire document | 1-21 |
| A | CN 115618872 A (ALIBABA SINGAPORE HOLDINGS LIMITED) 17 January 2023 (2023-01-17)<br>entire document | 1-21 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 April 2024** | **10 May 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 746 508 A1

## INTERNATIONAL SEARCH REPORT

International application No.

**PCT/CN2023/118375**

**C.     DOCUMENTS CONSIDERED TO BE RELEVANT**

| Category* | Citation of document, with indication, where appropriate, of the relevant passages | Relevant to claim No. |
|---|---|---|
| A | CN 115687921 A (NANJING UNIVERSITY OF POSTS AND TELECOMMUNICATIONS) 03 February 2023 (2023-02-03) entire document | 1-21 |
| A | CN 116306792 A (ZHEJIANG UNIVERSITY) 23 June 2023 (2023-06-23) entire document | 1-21 |
| A | US 2020143383 A1 (N3, LLC) 07 May 2020 (2020-05-07) entire document | 1-21 |

Form PCT/ISA/210 (second sheet) (July 2022)

48

**INTERNATIONAL SEARCH REPORT**
Information on patent family members

International application No.

**PCT/CN2023/118375**

| Patent document cited in search report | | | Publication date (day/month/year) | Patent family member(s) | | | Publication date (day/month/year) |
|---|---|---|---|---|---|---|---|
| CN | 114817565 | A | 29 July 2022 | None | | | |
| CN | 111241298 | A | 05 June 2020 | HK | 40024833 | A0 | 18 December 2020 |
| CN | 112800247 | A | 14 May 2021 | None | | | |
| CN | 114461816 | A | 10 May 2022 | None | | | |
| CN | 115618872 | A | 17 January 2023 | None | | | |
| CN | 115687921 | A | 03 February 2023 | None | | | |
| CN | 116306792 | A | 23 June 2023 | None | | | |
| US | 2020143383 | A1 | 07 May 2020 | WO | 2020097135 | A1 | 14 May 2020 |
| | | | | CN | 113168639 | A | 23 July 2021 |

Form PCT/ISA/210 (patent family annex) (July 2022)